# EUROPEAN PATENT APPLICATION

(11) **EP 1 793 069 A1**
(43) Date of publication of application: **06.06.2007**
(21) Application number: 05783543.1
(22) Date of filing: 14.09.2005
(51) Int. Cl.: E05B 65/20, E05B 1/00, E05B 49/00, B60J 5/04, B60R 25/00, H01H 13/00, H01H 13/08

(54) **DOOR OPEN/CLOSE DEVICE, KEYLESS ENTRY DEVICE PROVIDED WITH THE DOOR OPEN/CLOSE DEVICE, VEHICLE DOOR OR BUILDING DOOR EQUIPPED WITH THE KEYLESS ENTRY DEVICE**

(30) Priority: 14.09.2004 JP 2004266393
(71) Applicant: MATSUSHITA ELECTRIC INDUSTRIAL CO., LTD., Osaka 571-8501 (JP)
(72) Inventor: UEDA, Shigeki c/o Matsushita Electric Ind. Co., Chuo-ku, Osaka-shi Osaka 540-6319 Japan (JP); OGINO, Hiroyuki c/o Matsushita Electric Ind. Co., Chuo-ku, Osaka-shi Osaka 540-6319 Japan (JP); INUI, Hirofumi c/o Matsushita Electric Ind. Co., Chuo-ku, Osaka-shi Osaka 540-6319 Japan (JP); INOUE, Tomoya c/o Matsushita Electric Ind. Co., Chuo-ku, Osaka-shi Osaka 540-6319 Japan (JP); KANEKO, Hideki c/o Matsushita Electric Ind. Co., Chuo-ku, Osaka-shi Osaka 540-6319 Japan (JP)
(74) Representative: Grünecker, Kinkeldey, Stockmair & Schwanhäusser Anwaltssozietät
(86) International application number: PCT/JP2005/016951
(87) International publication number: WO 2006/030831

(57) **Abstract**

An object of the invention is to provide a door open/close device capable of unlocking/locking a door simultaneously with an operation of externally and internally opening/closing the door. The door open/close device according to the invention has: an outer door handle (23) and an inner door handle (24) gripped at the time of opening/closing a door; a door lock unit (22) for locking the door to prevent the door from being opened out of a body in which the door is closed; a door engagement unit (25) for engaging the door with the body so that the door can be opened/closed; a door disengagement/engagement operation unit (26) interlocked with an external or internal door opening/closing operation for undoing/doing the door engagement unit; a door disengagement/engagement signal detection unit (27) for generating a signal based on the operation of the door disengagement/engagement operation unit; and a body side control unit (28) for controlling undoing/doing of the door lock unit (22) based on the signal detected by the door disengagement/engagement signal detection unit.

## Description

### Technical Field

The present invention relates to a door open/close device which is suitable for a keyless entry system capable of locking/unlocking a door of a vehicle such as a car without any key operation and which is used for a vehicle door or a building door. The prevent invention also relates to a door handle device which is suitable for a keyless entry system capable of locking/unlocking a door of a vehicle such as a car without any key operation. Particularly it relates to a door handle device for achieving improvement in reliability on the operation of the keyless entry system, reduction in consumed current, etc.

### Background Art

Vehicles such as cars equipped with keyless entry systems for convenience and improvement in security have increased in number in recent years.

A keyless entry system is a system capable of locking/unlocking a door without any key operation. The keyless entry system locks/unlocks a door by verifying security code data or the like by wireless communication between a wireless communication terminal portably carried with a driver and an on-vehicle wireless communication terminal.

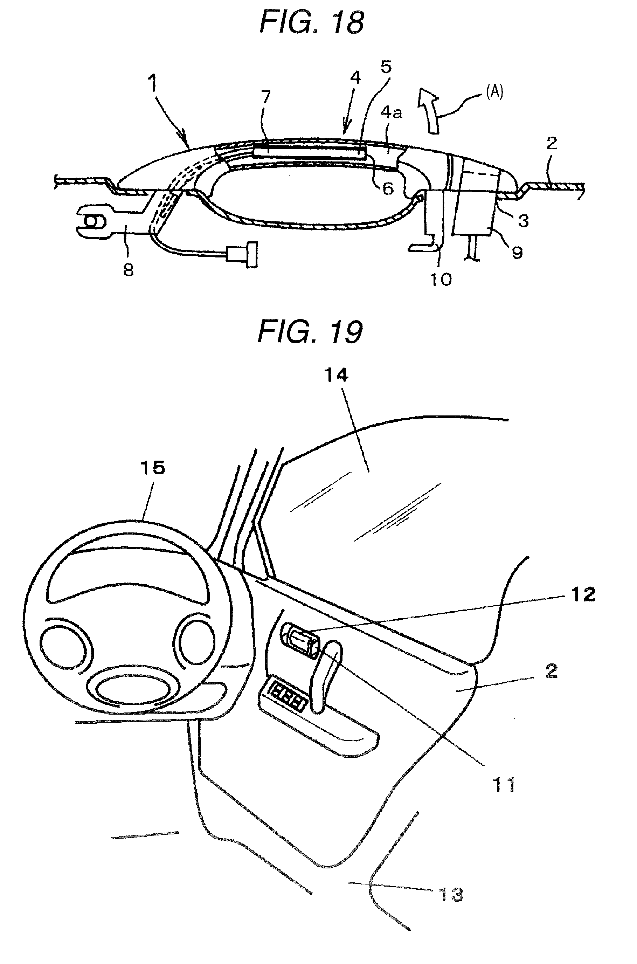

A door handle for a car as a vehicle shown in Fig. 18 has been heretofore proposed for such a keyless entry system.

The door handle 1 has: a handle body 4 incorporated in an opening portion 3 of a door 2 of a car so as to serve as a grip portion at the time of opening/closing the door and formed as a hollow structure; and a handle operation detection sensor 5 incorporated in the hollow portion 4a in the handle body 4.

The handle operation detection sensor 5 detects the presence/absence of a door opening/closing operation on the basis of change in capacitance with attention given to the fact that capacitance around the handle body 4 changes according to contact with a human body when a driver or the like uses his/her hand to touch the handle body 4. The handle operation detection sensor 5 has: a sensor electrode 6 for detecting change in capacitance; and an antenna 7 for exchanging a signal with a wireless communication terminal portably carried with the driver when the sensor electrode 6 detects change in capacitance not smaller than a predetermined value (e.g. see Patent Document 1).

Incidentally, an arm 8 extending from a front portion is connected to a door side so that the handle body 4 can turn in the direction of the arrow (A). A key cylinder 9 and a bell-crank 10 for externally locking the door 2 to prevent the door 2 from being opened unexpectedly are provided on a rear side of the handle body 4. The bell-crank 10 cooperates with a link mechanism not shown to form a door lock device.

Vehicles such as cars equipped with keyless entry systems have increased in number for improvement in convenience and security in recent years.

A keyless entry system is a system capable of locking/unlocking a door without any key operation. The keyless entry system locks/unlocks the door by verifying security code data or the like by wireless communication between a wireless communication terminal portably carried with the driver and an on-vehicle wireless communication terminal.

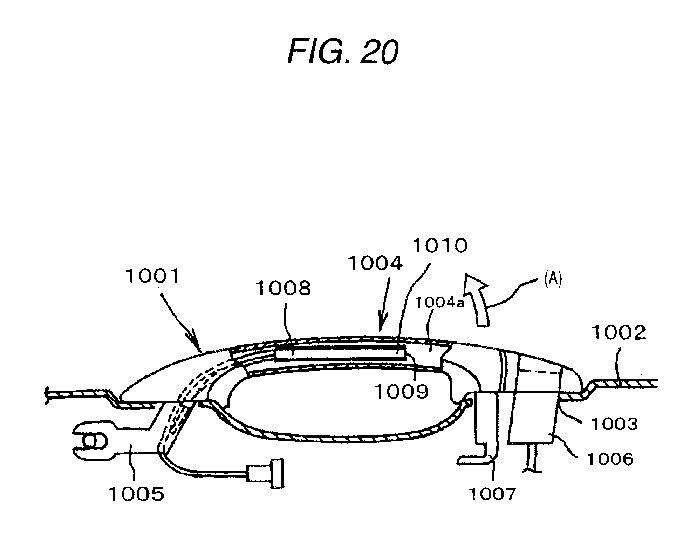

A vehicle door handle shown in Fig. 20 has been heretofore proposed for such a keyless entry system.

The vehicle door handle 1001 has: a handle body 1004 incorporated in an opening portion 1003 of a door outer panel 1002 of a vehicle so as to serve as a grip portion at the time of opening/closing a door and formed as a hollow structure; and a handle operation detection sensor 1010 incorporated in the hollow portion 1004a in the handle body 1004.

The handle operation detection sensor 1010 detects the presence/absence of a door opening/closing operation on the basis of change in capacitance with attention given to the fact that capacitance around the handle body 1004 changes according to contact with a human body when a driver or the like uses his/her hand to touch the handle body 1004. The handle operation detection sensor 1010 has: a sensor electrode 1009 for detecting change in capacitance; and an antenna 1008 for exchanging a signal with a wireless communication terminal portably carried with the driver when the sensor electrode 1009 detects change in capacitance not smaller than a predetermined value (e.g. see Patent Document 1).

Incidentally, an arm 1005 extending from a front portion is connected to a door side so that the handle body 1004 can turn in the direction of the arrow (A). A key cylinder casing 1006 and a bell-crank 1007 are provided on a rear side of the handle body 1004. The bell-crank 1007 cooperates with a link mechanism not shown to form a door lock device.
Patent Document J: JP-A-2003-194959

### Disclosure of the Invention

### Problem that the Invention is to Solve

The aforementioned door handle 1 however has a problem that the shape and size of the handle body 4 are limited because a hollow portion 4a having a size not smaller than a predetermined value must be reserved in the handle body 4 in order to incorporate the handle operation detection sensor 5 in the handle body 4.

Moreover, for example, capacitance around the handle body 4 varies finely according to approach of or contact with an article except a human body.

Therefore, if the detection sensitivity of the capacitance type handle operation detection sensor 5 is made low enough to avoid mistaken detection of the fine variation of capacitance due to such disturbance, there is a risk that lowering of handling property will be brought by the necessity of retrying hand's or finger's contact with the handle body 4 because the presence/absence of the operation of opening/closing the door 2 cannot be detected when pressure of hand's or finger's contact with the handle body 4 is weak at the time of opening/closing the door 2.

On the other hand, if the detection sensitivity of the handle operation detection sensor 5 is made high, there is a risk that idle signal transmission will bring release of noise to the environment because the handle operation detection sensor 5 transmits a signal by misjudging even fine variation of capacitance due to disturbance as the operation of opening/closing the door 2 though the presence/absence of the operation of opening/closing the door 2 can be detected surely even in the case where pressure of hand's or finger's contact with the handle body 4 is weak at the time of opening/closing the door 2.

Moreover, as shown in Fig. 19, a door lock knob 11 for locking a door lock device (not shown) from the indoor side is provided in a door of a car so that the door 2 is prevented from being opened unintentionally during the traveling of the car. Accordingly, to get off the stopped vehicle, after the door lock knob 11 is first unlocked, the door 2 is opened outward while the inner door handle 12 is operated to undo (hereinafter referred to "disengage") a door engagement unit (not shown) made of an L-shaped hook and detachably engaged with a U-shaped bracket provided in the car body 13.

Of course, to open the door 2 from the outside and get on the car, after the door lock device is unlocked by an operation of inserting a key in a key cylinder (not shown) and turning the key, the door 2 is opened outward while the outer door handle is operated to disengage the door engagement unit. In the drawing, 14 designates window glass, and 15 designates a driver's steering wheel.

As described above, in the car, the door is generally opened while the inner door handle or the outer door handle is operated to disengage the door engagement unit engaged with the car body after the door lock device is unlocked when the door lock device locks the door because the door can be opened both from the outside and from the inside. Accordingly, at least the timing that unlocking of the door lock device is completed before the operation of disengaging the door engagement unit by the inner door handle or the outer door handle is completed is most suitable in terms of the door opening operation.

From the viewpoint of the aforementioned car door opening/closing operation, the technique concerned with the handle operation detection sensor at the time of opening/closing the door from the cabin side has been not disclosed in the background art. If the operation of opening/closing the door from the cabin side needs to be detected, it may be conceived that a handle operation detection sensor is provided in the inner door handle in the same manner as in the configuration that the handle operation detection sensor is provided in the handle body on the outside. It is however conceived that various limitations on design such as the necessity of increasing the space for installation of the inner door handle are placed because the inner door handle is enlarged.

As described above, in the handle operation detection sensor 5, it is conceived that the operation of undoing the door lock device is delayed regardless of the operation of disengaging the door engagement unit based on the opening operation due to the handle body if there is a risk that detection of the door opening operation varies according to the way of gripping the handle body 4. On this occasion, timing must be shifted so that the handle body 4 can be operated again to open the door. It is conceived that lowering of handling property is brought.

As described above with reference to Fig. 19, the door must be opened in such a manner that the door is unlocked and then the door handle is operated to disengage the door engagement unit. Because two-stage operations are required, the door opening/closing operation is troublesome.

An object of the invention to solve the problem in the background art is to provide a door open/close device in which a door can be unlocked or unlocked/locked simultaneously with an external or internal door opening operation or an external or internal door opening/closing operation.

The aforementioned vehicle door handle 1001 has a problem that the shape and size of the handle body 1004 are limited because a hollow portion 1004a with a size not smaller than a predetermined value must be secured in the handle body 1004 in order to incorporate the handle operation detection sensor 1010 in the handle body 1004.

For example, capacitance around the handle body 1004 varies finely according to approach of or contact with an article except a human body.

Therefore, if the detection sensitivity of the capacitance type handle operation detection sensor 1010 is made low enough to avoid mistaken detection of the fine variation of capacitance due to such disturbance, there is a risk that lowering of handling property will be brought by the necessity of retrying hand's or finger's contact with the handle body 1004 because the presence/absence of the door opening/closing operation cannot be detected when pressure of hand's or finger's contact with the handle body 1004 is weak at the time of opening/closing the door.

On the other hand, if the detection sensitivity of the handle operation detection sensor 1010 is made high, there is a risk that idle signal transmission will bring release of noise to the environment because the handle operation detection sensor 1010 transmits a signal by misjudging even fine variation of capacitance due to disturbance as the operation of opening/closing the door though the presence/absence of the operation of opening/closing the door can be detected surely even in the case where pressure of hand's or finger's contact with the handle body 1004 is weak at the time of opening/closing the door.

Another object of the invention relating to solution of the aforementioned problem is to provide a door handle device in which: the degree of freedom for design of the shape and size of the handle body is high; detection sensitivity is so high that the presence/absence of the door opening/closing operation can be detected surely even in the case where hand's or finger's contact with the handle body is weak at the time of opening/closing the door; and the burden on an on-vehicle battery can be lightened by reduction in consumed current as well as release of noise to the environment is prevented from being caused by idle signal transmission, and a keyless entry device using the door handle device.

### Means for Solving the Problem

To solve the aforementioned problem, the present invention provides a door open/close device including: an outer door handle and an inner door handle gripped at the time of opening/closing a door; a door lock unit for locking the door to prevent the door from being opened; a door engagement unit for engaging the door with the body so that the door can be opened/closed; a door disengagement operation unit interlocked with an external or internal door opening operation for undoing the engagement done by the door engagement unit; a door disengagement signal detection unit for generating a signal based on the operation of the door disengagement operation unit; and a body side control unit for controlling undoing of the door lock unit based on the signal detected by the door disengagement signal detection unit.

The present invention also provides a door open/close device including: an outer door handle and an inner door handle gripped at the time of opening/closing a door; a door lock unit for locking the door to prevent the door from being opened; a door engagement unit for engaging the door with a body so that the door can be opened/closed; a door disengagement/engagement operation unit interlocked with an external or internal door opening/closing operation for undoing/doing the door engagement unit; a door disengagement/engagement signal detection unit for generating a signal based on the operation of the door disengagement/engagement operation unit; and a body side control unit for controlling undoing/doing of the door lock unit based on the signal detected by the door disengagement/engagement signal detection unit.

Accordingly, the door can be unlocked or unlocked/locked simultaneously with an external or internal door opening operation or an external or internal door opening/closing operation, so that it is very easy to open the door or open/close the door.

The present invention also provides a door open/close device including: an outer door handle and an inner door handle gripped at the time of opening/closing a door; a door lock unit for locking the door to prevent the door from being opened; a door engagement unit for engaging the door with the body so that the door can be opened/closed; a door disengagement operation unit interlocked with an external or internal door opening operation for undoing the engagement done by the door engagement unit; a door disengagement signal detection unit for generating a signal based on the operation of the door disengagement operation unit; and a body side control unit for controlling undoing of the door lock unit based on the signal detected by the door disengagement signal detection unit.

Accordingly, the door disengagement signal detection unit generates a signal in response to the operation of the door disengagement operation unit interlocked with an external or internal door opening operation. The body side control unit receiving the signal undoes the door lock unit. Accordingly, the door can be unlocked simultaneously with the external or internal door opening operation, so that the door can be opened externally or internally easily without any trouble compared with the background art.

The present invention also provides a door open/close device including: an outer door handle and an inner door handle gripped at the time of opening/closing a door; a door lock unit for locking the door to prevent the door from being opened; a door engagement unit for engaging the door with a body so that the door can be opened/closed; a door disengagement/engagement operation unit interlocked with an external or internal door opening/closing operation for undoing/doing the door engagement unit; a door disengagement/engagement signal detection unit for generating a signal based on the operation of the door disengagement/engagement operation unit; and a body side control unit for controlling undoing/doing of the door lock unit based on the signal detected by the door disengagement/engagement signal detection unit.

Accordingly, the door disengagement/engagement signal detection unit generates a signal in response to the operation of the door disengagement/engagement operation unit interlocked with an external or internal door opening/closing operation. The body side control unit receiving the signal undoes/does the door lock unit. Accordingly, the door can be unlocked/locked simultaneously with the external or internal door opening/closing operation, so that the door can be opened externally or internally easily without any trouble compared with the background art.

The invention also provides the door open/close device wherein the door disengagement signal detection unit or the door disengagement/engagement signal detection unit is provided singly for detecting an external or internal door opening operation or an external or internal door opening/closing operation.

Accordingly, the door disengagement signal detection unit or the door disengagement/engagement signal detection unit generates a signal in response to the operation of the door disengagement operation unit interlocked with an external or internal door opening operation or the door disengagement/engagement operation unit interlocked with an external or internal door opening/closing operation. Accordingly, the door disengagement signal detection unit or the door disengagement/engagement signal detection unit can be used in common to both detection of the external door opening operation and detection of the internal door opening operation or in common to both detection of the external door opening/closing operation and detection of the internal door opening/closing operation, so that configuration can be simplified. Moreover, the external or internal door opening operation or the external or internal door opening/closing operation can be detected without variation, so that the door can be opened/closed stably.

The invention also provides the door open/close device wherein the door disengagement signal detection unit or the door disengagement/engagement signal detection unit is provided in a position where a signal is generated by the operation of a common portion interlocked with an external or internal door opening operation of the door disengagement operation unit or an external or internal door opening/closing operation of the door disengagement/engagement operation unit.

Accordingly, the same action as the aforementioned invention can be obtained. Moreover, the door disengagement signal detection unit or the door disengagement/engagement signal detection unit can be set easily because it is provided in a position where a signal is generated in accordance with the operation of the common portion interlocked with the external or internal door opening operation or the external or internal door opening/closing operation.

The invention also provides the door open/close device wherein the door disengagement signal detection unit or the door disengagement/engagement signal detection unit is provided in the inside of the door. The door disengagement signal detection unit or the door disengagement/engagement signal detection unit is provided in the inside of the door wider than the inside of the inner or outer door handle gripped at the time of opening/closing the door. Accordingly, limitation on space can be lightened, so that the door disengagement signal detection unit or the door disengagement/engagement signal detection unit can be set easily.

Because it is not necessary to incorporate the door disengagement signal detection unit or the door disengagement/engagement signal detection unit in the door handle, it is not necessary to provide a hollow portion of a predetermined size enough to incorporate the door disengagement signal detection unit or the door disengagement/engagement signal detection unit in the door handle. The shape and size of the door handle can be designed freely while importance is given to gripping characteristic, external appearance design, etc. at the time of operating the door handle. The degree of freedom for design of the shape and size of the door handle can be made high.

The invention also provides the door open/close device wherein the door disengagement signal detection unit or the door disengagement/engagement signal detection unit is made of a piezoelectric element member which is arranged so that the operation of the door disengagement operation unit or the door disengagement/engagement operation unit deforms the piezoelectric element member to thereby output an electric signal from the piezoelectric element member.

Accordingly, the piezoelectric element member is used as the door disengagement signal detection unit or the door disengagement/engagement signal detection unit, and the piezoelectric element member is deformed by the operation of the door disengagement operation unit or the door disengagement/engagement operation unit so that a signal is output from the piezoelectric element member. Accordingly, the detection sensitivity of the external or internal door opening operation or the external or internal door opening/closing operation can be made good. The timing for disengaging the door engagement unit from the body and for undoing the door lock unit due to the outer door handle or the inner door handle or the timing for undoing/doing the door engagement unit and for undoing/doing the door lock unit due to the outer door handle or the inner door handle can be optimized easily. Handling property in opening the door or in opening/closing the door can be improved.

The present invention also provides the door open/close device wherein: the piezoelectric element member has a bent portion on which tension is applied; and the piezoelectric element member is arranged so that the bent portion is deformed by the operation of the door disengagement operation unit or the door disengagement/engagement operation unit.

Accordingly, the bent portion of the piezoelectric element member on which tension is applied to make detection sensitivity high is deformed by the operation of the door disengagement operation unit or the door disengagement/engagement operation unit. Accordingly, the detection sensitivity of the external or internal door opening operation or the external or internal door opening/closing operation can be made higher. The timing for disengaging the door engagement unit from the body and for undoing the door lock unit due to the outer door handle or the inner door handle or the timing for undoing/doing the door engagement unit and for undoing/doing the door lock unit due to the outer door handle or the inner door handle can be optimized easily. Handling property in opening the door or in opening/closing the door can be improved more greatly.

The invention also provides a keyless entry device wherein the body side control unit includes: a body transmission/reception unit; a security code signal request unit for requesting a security code request signal from a door opening/closing operator portable control unit through the body transmission/reception unit in response to a detection signal from the door disengagement signal detection unit or the door disengagement/engagement signal detection unit; a door opening/closing operator judgment unit for decrypting a security code signal transmitted by the door opening/closing operator portable control unit and judging whether the decrypted security code signal is a predetermined legal signal or not; and an unlock control unit or a unlock/lock control unit for controlling unlocking or unlocking/locking of the door lock unit when the security code signal is legal.

Accordingly, the same effect as any one of the aforementioned inventions can be obtained. The detection sensitivity of the external or internal door opening operation or the external or internal door opening/closing operation is good. Accordingly, the time until the unlock control unit performs unlock control of the door lock unit or the unlock/lock control unit performs unlock/lock control of the door lock unit as the keyless entry device can be shortened, so that the door lock unit can be undone/done smoothly in response to rapid opening of the door or rapid opening/closing of the door.

The invention also provides a vehicle door equipped with the keyless entry device so that the same effect as in the aforementioned invention can be obtained. When, for example, the door is mounted in a car, the door can be opened or the door can be opened/closed externally or internally easily in the timing for undoing/doing the door lock unit when a person needs to get on/off the car. Accordingly, such a car that a person can get on/off smoothly can be provided.

The invention also provides a building door equipped with the keyless entry device. The same effect as in the aforementioned invention can be obtained. When the door is mounted in a house or the like, the door can be opened or the door can be opened/closed externally or internally easily in the timing for undoing/doing the door lock unit when a person needs to go into or come out of the house. Accordingly, such a house that a person can go into or come out smoothly can be provided.

The door handle device according to the invention is characterized in that the door handle device includes: a handle body incorporated in a door so as to serve as a grip portion at the time of opening/closing the door; and a piezoelectric sensor attached to a door side of the handle body; wherein the piezoelectric sensor is attached to a surface of the handle body facing the door through a cushioning material having a plurality of independently displaceable portions.

The door handle device according to the invention is characterized in that the independently displaceable portions are formed in such a manner that the cushioning material is notched at a plurality of portions.

The door handle device according to the invention is characterized in that the door handle device includes: a handle having one end side rotatably supported to a door through a support shaft, and the other end side moved in a door drawing direction by the rotation; and a piezoelectric sensor attached to a lever portion which is attached to a support portion supporting the handle so as to be inclined at a predetermined angle with respect to the support shaft.

The keyless entry device according to the invention includes: any one of the door handle devices described above; a vehicle side transmitter/receiver mounted on a vehicle side; a portable side transmitter/receiver carried with an operator; and a control portion for unlocking a door when a security code signal transmitted by the portable side transmitter/receiver is received by the vehicle side transmitter/receiver after a security code request signal transmitted by the vehicle side transmitter/receiver is received by the portable side transmitter/receiver; wherein the keyless entry device is characterized in that the control portion includes: a security code signal request unit for making the vehicle side transmitter/receiver to transmit the security code request signal in response to a detection signal from the piezoelectric sensor; a security code signal judgment unit for judging whether the security code signal received by the vehicle side transmitter/receiver and decrypted is a predetermined legal signal or not; and an unlock instruction unit for instructing unlocking of the door lock unit when the security code signal is a legal signal.

### Effect of the Invention

According to the invention, a door can be unlocked or unlocked/locked simultaneously with an external or internal door opening operation or an external or internal door opening/closing operation, so that a user can open/close the door with ease.

Moreover, the degree of freedom in design of the shape and size of a handle body is high. Moreover, detection sensitivity is so high that the presence/absence of a door opening/closing operation can be detected surely even in the case where a hand or a finger softly touches the handle body at the time of opening/closing the door. Moreover, release of noise to the environment due to idle signal transmission can be prevented and, at the same time, load imposed on an on-vehicle battery can be lightened by reduction in consumed current.

### Brief Description of the Drawings

[Fig. 1] A configuration block diagram showing a door open/close device according to the invention in Embodiment 1 in which the door open/close device is mounted in a vehicle door.
[Fig. 2] (a) being a schematic configuration view of a door engagement unit portion of the door open/close device at the time of closing a door, (b) being a view of a disengagement/engagement detection portion of the door engagement unit.
[Fig. 3] (a) being a schematic configuration view of the door engagement unit portion of the door open/close device at the time of opening a door, (b) being a view of a disengagement/engagement detection portion of the door engagement unit.
[Fig. 4] A configuration view of a unit including a piezoelectric element member which is provided in the door open/close device for detecting the opening/closing of the door.
[Fig. 5] A configuration view of the piezoelectric element member in the door open/close device.
[Fig. 6] A control block diagram of a keyless entry device using the door open/close device.
[Fig. 7] (a) being a graph of bending load applied on the piezoelectric element member of the door open/close device, (b) being an output characteristic graph of the piezoelectric element member in accordance with the bending load.
[Fig. 8] An external appearance perspective view showing a door handle device according to a second embodiment of the invention.
[Fig. 9] (a) being an inner configuration view of an A-A section in Fig. 8 in this embodiment, (b) being an inner configuration view of a B-B section in the (a) in this embodiment, (c) being an inner configuration view of a C-C section in the (b) in this embodiment.
[Fig. 10] A schematic configuration view of a piezoelectric sensor shown in Fig. 9 in this embodiment.
[Fig. 11] A configuration view of the piezoelectric element member in this embodiment.
[Fig. 12] A block diagram of a door handle device in this embodiment.
[Fig. 13] (a) being a graph showing bending load applied on the piezoelectric sensor in this embodiment, (b) being a sensor output graph in accordance with the bending load on the piezoelectric sensor in this embodiment.
[Fig. 14] A sectional view showing a door handle device according to a third embodiment of the invention.
[Fig. 15] A view from D-D arrows in Fig. 14 in this embodiment.
[Fig. 16] (a) being a schematic configuration diagram of a keyless entry device according to a fourth embodiment of the invention, (b) being a configuration diagram of important part of the keyless entry device in this embodiment.
[Fig. 17] A flow chart showing an operating procedure of the keyless entry device depicted in Fig. 16 in this embodiment.
[Fig. 18] A sectional view of important part of a handle portion of a door in a background-art car.
[Fig. 19] A schematic perspective view of the handle portion of the door from the indoor side of the background-art car.
[Fig. 20] A configuration explanatory view of a background-art vehicle door handle device.

### DESCRIPTION OF REFERENCE NUMERALS

- 20: body
- 21: door
- 22: door lock unit
- 23: outer door handle
- 24: inner door handle
- 25: door engagement unit
- 26: door disengagement/engagement operation unit (door disengagement operation unit)
- 27: door disengagement/engagement signal detection unit (door disengagement signal detection unit)
- 28: body side control unit
- 34: lever (common portion)
- 36: piezoelectric element member
- 36a: bent portion
- 46: body transmission/reception unit
- 48: unlock/lock control unit (unlock control unit)
- 56: door opening/closing operator portable control unit
- 57: security code signal request unit
- 61: security code signal judgment unit
- 1013: door
- 1015: piezoelectric sensor
- 1021: support shaft
- 1022: notch
- 1023: handle body
- 1025: cushioning material
- 1091: vehicle side transmitter/receiver
- 1093: portable side transmitter/receiver
- 1101: control circuit (control portion)
- 1105: security code signal request unit
- 1111: security code signal judgment unit
- 1113: unlock instruction unit
- 1702: lever portion

### Best Mode for Carrying Out the Invention

The object of the present invention can be achieved by incorporating the aforementioned inventions into the following embodiments as important parts. Accordingly, details of the embodiments corresponding to claims will be described below as the best modes for carrying out the present invention with reference to the drawings. Incidentally, the present invention is not limited to these embodiments. In the description of these embodiments, parts the same in configuration, operation and effect are referred to by the same numerals so that redundant description thereof will be omitted here.

### (Embodiment 1)

Embodiments in which a door open/close device according to the present invention is mounted in a vehicle door will be described below in detail with reference to the drawings.

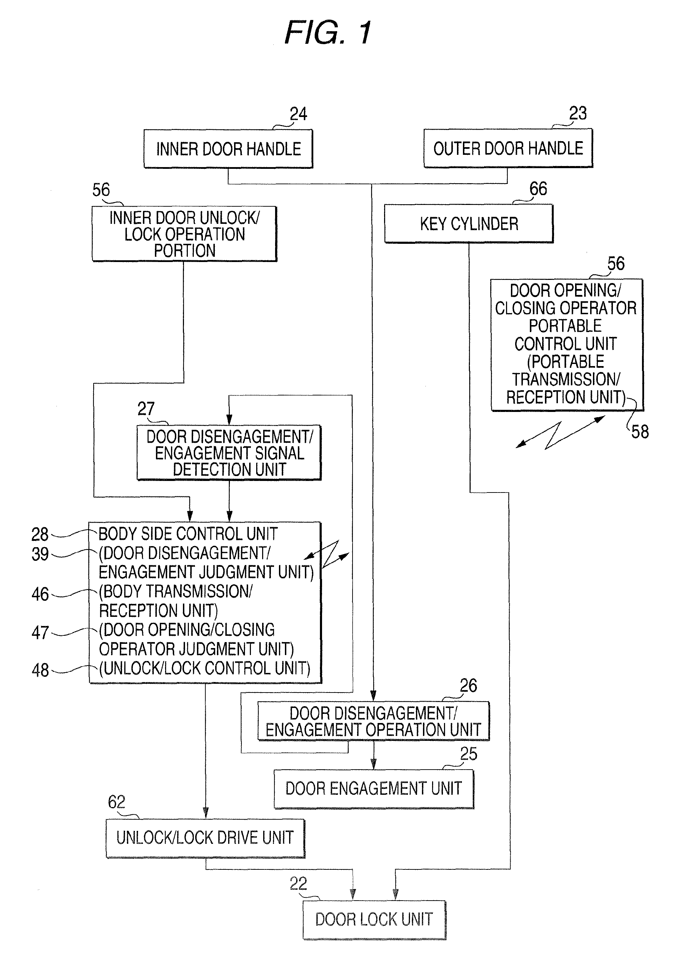

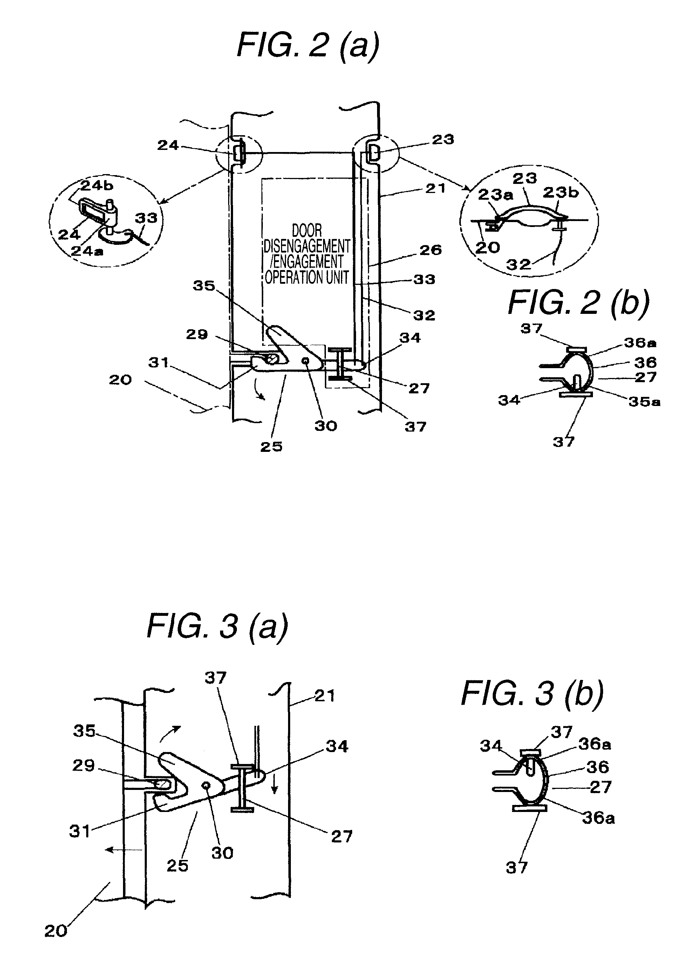

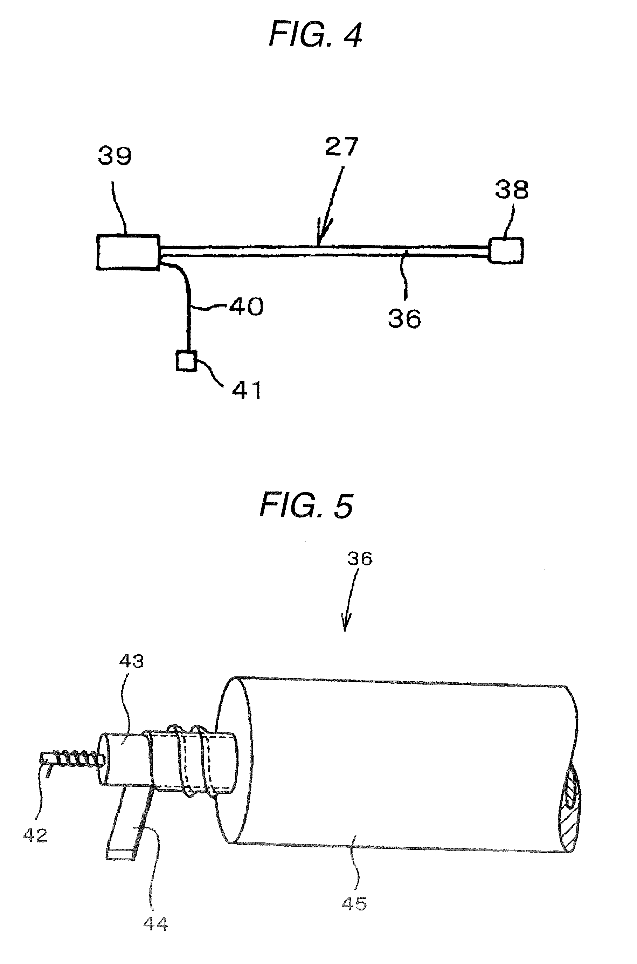

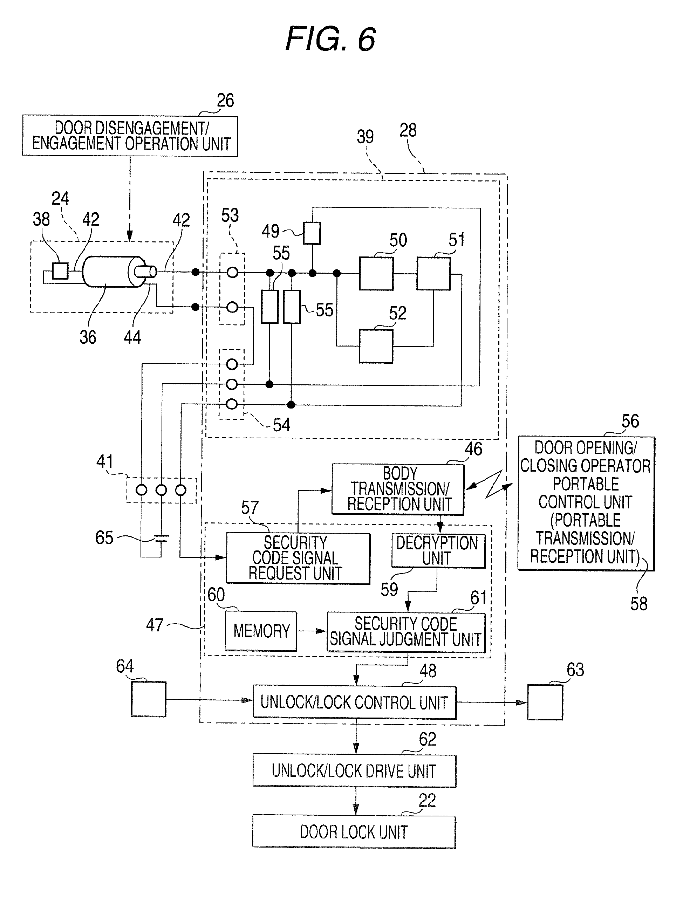

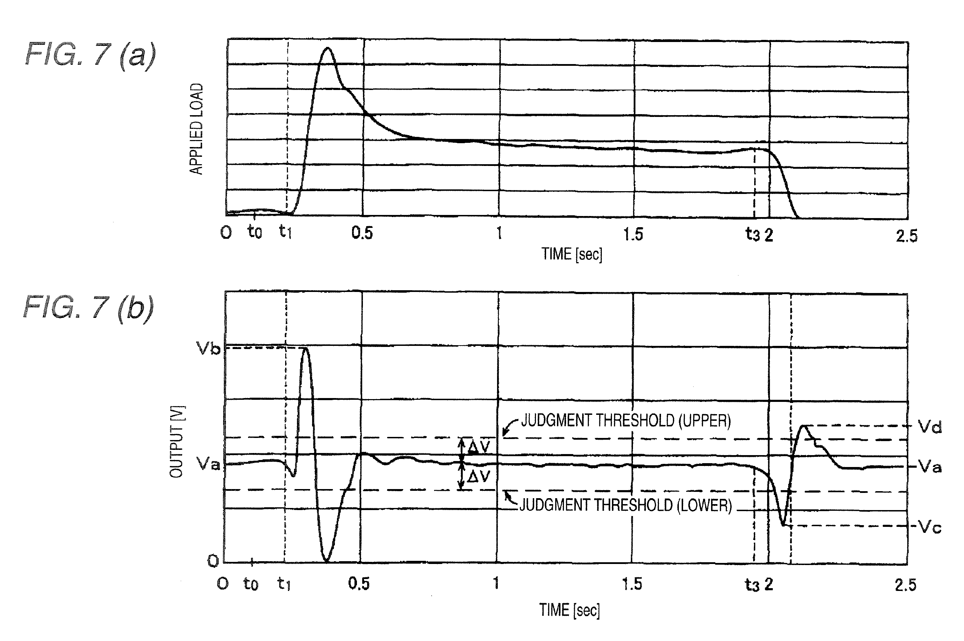

Fig. 1 is a block diagram of an embodiment in which a door open/close device and a keyless entry device according to the present invention are mounted in a vehicle door. Fig. 2(a) is a schematic confirmation view of a door engagement unit portion when the door is closed. Fig. 2(b) is a view of an unlock/lock detection portion of the door engagement unit. Fig. 3(a) is a schematic configuration view of the door engagement unit portion when the door is opened. Fig. 3(b) is a view of the unlock/lock detection portion of the door engagement unit. Fig. 4 is a configuration view of a unit including a piezoelectric element member for detecting opening/closing of the door. Fig. 5 is a configuration view of the piezoelectric element member of the door open/close device. Fig. 6 is a control block diagram of the keyless entry device using the door open/close device shown in Fig. 1. Fig. 7(a) is a graph of bending load applied on the piezoelectric element member. Fig. 7(b) is a characteristic graph of output of the piezoelectric element member in accordance with the bending load.

A body 20 which is a vehicle body of a car includes doors 21, and door lock unit 22. Each door 21 is opened/closed with its end portion as a fulcrum when a person is gotten on/off the car. The door lock unit 22 locks the door 21 to prevent the door 21 from being opened selfishly from the body 20. The door 21 includes an outer door handle 23, an inner door handle 24, and a door engagement unit 25. The outer door handle 23 and the inner door handle 24 can be held by a hand for an operation of opening/closing the door 21 when a person is gotten on/off the body 20. The door engagement unit 25 is provided in the inside of the door 21 so that the door 21 can be engaged with the body 20 openably.

The door open/close device according to the embodiment of the present invention is a door open/close device which includes the outer door handle 23, the inner door handle 24, the door lock unit 22, and the door engagement unit 25 and which further includes a door disengagement/engagement operation unit 26 for undoing/doing the door engagement unit 25 interlocked with an operation for opening/closing the door from the outside or inside, a door disengagement/engagement signal detection unit 27 for detecting the operation of the door disengagement/engagement operation unit 26, and a body-side control unit 28 operated in accordance with a detection signal of the door disengagement/engagement signal detection unit 27 to control unlocking and locking of the door lock unit 22 when a legal operator operates to open/close the door.

As shown in Fig. 2(a), the outer door handle 23 undoes the door engagement unit 25 to open the door 21 while the other end portion 23b is gripped, pulled out against elastic force and rotated with one end portion 23a as a fulcrum. As shown in Fig. 2(a), the inner door handle 24 undoes the door engagement unit 25 to open the door 21 while the other end portion 24b is pulled against elastic force and rotated with one end portion 24a as a fulcrum.

The door engagement unit 25 has a U-shaped bracket 29, and an L-shaped hook 31. The U-shaped bracket 29 is, for example, fixed to the body 20. The L-shaped hook 31 engages/disengages with/from the U-shaped bracket 29 in such a manner that the L-shaped hook 31 rotates vertically around a pivot 30 located at its one end portion and then rotates drastically when the L-shaped hook 31 goes beyond a certain rotation position. The door engagement unit 25 undoes/does engagement interlocked with an external or internal operation due to the outer door handle 23 or the inner door handle 24 for opening/closing the door 21.

The door engagement unit 25 is connected to the outer door handle 23 and the inner door handle 24 through the door disengagement/engagement operation unit 26 which is provided in the inside of the door 21 so that the door engagement unit 25 is interlocked with an operation of opening/closing the door from the outside or inside. The door disengagement/engagement operation unit 26 includes an outer wire 32, an inner wire 33, a lever 34, and a cam 35. For example, each of the outer wire 32 and the inner wire 33 has one end portion connected to corresponding one of the outer door handle 23 and the inner door handle 24. The lever 34 is connected to the other end portion of the outer wire 32 and the other end portion of the inner wire 33 and provided so as to be integrated with the other end portion of the L-shaped hook 31 with the pivot 30 as a border. The cam 35 is provided opposite to the L-shaped hook 31 so as to be integrated with the L-shaped hook 31.

That is, the door engagement unit 25 has the following configuration. When the outer door handle 23 is gripped, pulled and rotated in the condition that the door 21 is closed into the body 20 so that the L-shaped hook 31 engages with the U-shaped bracket 29 as shown in Fig. 2(a), the lever 34 is pulled up through the outer wire 32 with the pivot 30 as its center so that the L-shaped hook 31 is moved down and disengaged from the U-shaped bracket 29 as represented by the arrow to thereby make it possible to open the door 21 as shown in Fig. 3(a).

The door engagement unit 25 also has the following configuration. Similarly to the aforementioned configuration, when the inner door handle 24 is gripped, pulled and rotated in the condition that the door 21 is closed into the body 20 so that the L-shaped hook 31 engages with the U-shaped bracket 29 as shown in Fig. 2(a), the lever 34 is pulled up through the inner wire 33 with the pivot 30 as its center so that the L-shaped hook 31 is moved down and disengaged from the U-shaped bracket 29 as represented by the arrow to thereby make it possible to open the door 21 as shown in Fig. 3(a). In addition, the configuration is made so that when one of the outer wire 32 and the inner wire 33 is operated, the other has no influence on the operation.

The door engagement unit 25 also has the following configuration. When the outer door handle 23 is gripped and the door 21 is pushed toward the body 20 so as to be closed in the condition that the door 21 is opened from the body 20 so that the L-shaped hook 31 disengages from the U-shaped bracket 29 as shown in Fig. 3(a), the cam 35 striking against the U-shaped bracket 29 is pushed up with the pivot 30 as its center as represented by the arrow. In accordance with the up pushing, the L-shaped hook 31 engages with the U-shaped bracket 29 while rotating upward. Thus, the door 21 is closed in the body 20 as shown in Fig. 2(a). It is a matter of course that the door engagement unit 25 has the following configuration. That is, when the inner door handle 24 is gripped to pull the opened door 21 toward the body 20 to close the door 21, the door engagement unit 25 operates in the same manner as described above so as not to exert any influence on the operations of the outer wire 32 and the inner wire 33 during the external or internal door closing operation.

In order to sensitively detect both the external door opening/closing operation and the internal door opening/closing operation, a cable-like piezoelectric element member 36 is used in the door disengagement/engagement signal detection unit 27 and provided in the inside of the door 21 so that the piezoelectric element member 36 suffers acceleration caused by the operation of the door disengagement/engagement operation unit 26 for undoing/doing the door engagement unit 25 in accordance with the operation of the outer door handle 23 and the operation of the inner door handle 24.

That is, the door disengagement/engagement signal detection unit 27 is disposed so that an electric signal is generated from the door disengagement/engagement signal detection unit 27 deformed by the lever 34 which is a constituent member of the door disengagement/engagement operation unit 26 which is a common portion interlocked with the external door opening/closing operation and the internal door opening/closing operation, in two positions, i.e. a door disengagement position (position as shown in Fig. 3(b)) inclusive of a position in the middle of undoing the door engagement unit 25 and a door engagement position (position as shown in Fig. 2(b)) inclusive of a position in the middle of doing the door engagement unit 25.

In order to improve the sensitivity of detecting undoing and doing of the door engagement unit 25 more greatly, a plurality of bent portions 36a on which tension is applied are provided in the piezoelectric element member 36 and disposed respectively in the door disengagement position (position as shown in Fig. 3(b)) inclusive of the middle of undoing the door engagement unit 25 and the door engagement position (position as shown in Fig. 2(b)) inclusive of the middle of doing the door engagement unit 25 so that the door disengagement/engagement signal detection unit 27 is disposed to be deformed by the lever 34. A bracket 37 is designed to catch the piezoelectric element member 36 so that the piezoelectric element member 36 can be deformed surely by the lever 34.

As shown in Fig. 4, the door disengagement/engagement signal detection unit 27 is formed as a unit which has a cable-like piezoelectric element member 36 with a predetermined length, a disconnection detection resistor 38 connected to one end of the piezoelectric element member 36, a door disengagement/engagement judgment unit 39 connected to the other end of the piezoelectric element member 36, a cable 40 connected to the door disengagement/engagement judgment unit 39, and a connector 41 connected to a leading end of the cable 40.

The cable 40 connected to the door disengagement/engagement judgment unit 39 is connected to an electric source and a communication terminal through the connector 41 mounted at the leading end of the cable 40 for the purposes of supplying electric power and outputting a detection signal.

The cable-like piezoelectric element member 36 used in the door disengagement/engagement signal detection unit 27 has a structure shown in Fig. 5. The cable-like piezoelectric element member 36 has a center electrode 42 disposed in the axial center, a piezoelectric element material 43 of piezoelectric ceramics for coating the circumference of the center electrode 45, an outer electrode 44 disposed on the circumference of the piezoelectric element material 43, and a vinyl chloride resin coating layer 45 for coating the outermost circumference.

This cable-like piezoelectric element member 33 has excellent flexibility and generates an output signal in accordance with deformation acceleration at the time of deformation. For example, sintered powder of lead titanate or lead zirconate titanate or sintered powder of lead-free piezoelectric ceramics such as sodium niobate is used as the piezoelectric ceramics of the piezoelectric element material 43.

In the piezoelectric element member 36, a resin material uniquely developed by the present applicant and having such heat resistance that a use temperature up to about 120°C is allowed is used as the piezoelectric element material 43, so that the piezoelectric element member 36 can be used in a temperature range (of not higher than 120°C) higher than 90°C which is the maximum use temperature of a high-molecular piezoelectric element material (uniaxially stretched polyvinylidene fluoride) or a piezoelectric element material (piezoelectric element material composed of chloroprene and piezoelectric ceramic powder) as a representative of the background art. Since the piezoelectric element material 43 is composed of a flexible resin and piezoelectric ceramics while flexible electrodes made of the coil-like metal center electrode 42 and the film-like outer electrode 44 are used, the piezoelectric element member 36 has flexibility substantially equal to an ordinary vinyl cord.

The piezoelectric element material 43 is made of a composite of a resin material and piezoelectric ceramic powder not larger than 10 µm. Vibration detection characteristic is achieved by the ceramics while flexibility is achieved by the resin. The piezoelectric element material 43 uniquely developed by the present applicant achieves high-temperature resistance (120°C) and flexibility for easy formability by using chlorinated polyethylene as a resin material and allows a simple production process without necessity of crosslinking.

The cable-like piezoelectric element member 36 obtained thus has no piezoelectric performance when the piezoelectric element material 43 is molded. It is therefore necessary to apply a DC high voltage of several kV/mm on the piezoelectric element material 43 to thereby perform a process (polarizing process) for giving piezoelectric performance to the piezoelectric element material 43.

When the piezoelectric element material 43 includes fine defects such as cracks, electric discharge occurs in the defect portions to short-circuit the two electrodes easily. Accordingly, it is impossible to apply a sufficient polarizing voltage. In the invention, however, a unique polarizing process using an auxiliary electrode which can be brought into contact with the piezoelectric element material 43 with a predetermined length is established so that polarization can be stabilized while defects are detected and avoided. As a result, the size of the piezoelectric element member 36 can be increased to the order of tens of meters or more.

In the piezoelectric element member 36, a coil-like metal center electrode is used as the center electrode 42, and a film-like electrode (aluminum-polyethylene terephthalate-aluminum three-layer laminate film) is used as the outer electrode 44. As a result, the piezoelectric element material 43 and the electrode can be kept in contact with each other. Moreover, an outer lead wire can be connected easily. Flexible cable-like mounting can be made.

The center electrode 42 is a copper-silver alloy coil. The outer electrode 44 is a three-layer laminate film of aluminum-polyethylene terephthalate-aluminum. The piezoelectric element material 43 is powder of polyethylene-based resin and piezoelectric ceramics. The coating layer 45 is a thermoplastic resin. As a result, a relative dielectric constant of 55, a charge generation quantity of 10 to 13C (coulomb)/gf and a maximum use temperature of 120°C can be obtained.

For example, the aforementioned piezoelectric element member 36 is produced by the following process. First, a chlorinated polyethylene sheet and 40 to 70 % by volume of piezoelectric ceramics (e.g. lead titanate zirconate) powder are mixed homogeneously in the form of a sheet by a rolling method. After the sheet is cut into fine pellets, the pellets are continuously extruded together with the center electrode 42 to thereby form a piezoelectric element material 43. While the auxiliary electrode is brought into contact with the outer circumference of the piezoelectric element material 43, a high voltage is applied between the auxiliary electrode and the center electrode 42 to perform a polarizing process. Then, the outer electrode 44 is wound around the piezoelectric element material 43. The coating layer 45 surrounding the outer electrode 44 is also continuously extruded.

When piezoelectric ceramic powder is added to the aforementioned chlorinated polyethylene, it is preferable that the piezoelectric ceramic powder is immersed in a solution of a titan coupling agent and dried in advance. By this treatment, the surface of the piezoelectric ceramic powder is covered with hydrophilic groups and hydrophobic groups contained in the titan coupling agent.

The hydrophilic groups prevent particles of piezoelectric ceramic powder from being aggregated. The hydrophobic groups increase wettability between chlorinated polyethylene and piezoelectric ceramic powder. As a result, a large quantity of piezoelectric ceramic powder up to 70 % by volume at the maximum can be added to chlorinated polyethylene homogeneously. It has been found that the same effect as described above can be obtained when a titan coupling agent is added at the time of rolling chlorinated polyethylene and piezoelectric ceramic powder instead of immersion in the aforementioned titan coupling agent solution. This treatment is excellent in that the process of immersion in the titan coupling agent solution is not particularly required. In this manner, chlorinated polyethylene plays a role of a binder resin for mixing piezoelectric ceramic powder.

In the case of this embodiment, a single conductor wire made of copper-based metal is used for the center electrode 42. A belt-like electrode having an aluminum metal film bonded onto a high-molecular layer is used for the outer electrode 47. The outer electrode 47 is wound around the piezoelectric element material 43. Polyethylene terephthalate (PET) is used as the high-molecular layer. An electrode having an aluminum thin film bonded onto PET is preferred as the outer electrode 44 because the electrode can be mass-produced commercially and at low cost. This electrode can be connected to the door disengagement/engagement judgment unit 39, for example, by caulking or eyeleting.

A metal single wire coil or a metal braided wire may be soldered around the aluminum thin film of the outer electrode 44 for connection to the door disengagement/engagement judgment unit 39. Because soldering can be made, working efficiency can be attained.

Incidentally, to shield the piezoelectric element member 36 from electric noise in the external environment, the outer electrode 44 is preferably wound around the piezoelectric element material 43 so that parts of the outer electrode 44 overlap one another. A rubber material more excellent in heat insulation and waterproofness than the aforementioned vinyl chloride resin may be used as the coating layer 45. As the rubber material, a material higher in plasticity and flexibility than the piezoelectric element material 43 is preferably used so that the piezoelectric element material 43 can be deformed easily by pressing force of an article brought into contact with the rubber material. On-vehicle parts are selected in consideration of heat resistance and low-temperature resistance. Specifically, parts less reduction in flexibility in a temperature range of from -30°C to 85°C are preferably selected. For example, ethylene-propylene rubber (EPDM), chloroprene rubber (CR), butyl rubber (IIR), silicone rubber (Si), thermoplastic elastomer, etc. may be used as the rubber material. According to the aforementioned configuration, the minimum radius of curvature of the piezoelectric element member 33 can be increased up to 5 mm, so that more excellent heat insulation and waterproofness can be kept compared with the background-art vinyl chloride.

As described above, because the piezoelectric element material 43 of the piezoelectric element member 36 has both flexibility like chlorinated polyethylene and high-temperature durability like piezoelectric ceramics, lowering of sensitivity at a high-temperature in the background-art piezoelectric element member using polyvinylidene fluoride as a piezoelectric substance can be avoided so that the piezoelectric element material 43 is excellent in high-temperature durability. Moreover, because a vulcanization process at the time of molding EPDM is not required, so that there can be obtained an advantage that the piezoelectric element material 43 is excellent in production efficiency.

The aforementioned door disengagement/engagement signal detection unit 27 is arranged on the outer circumference of the lever 34 so that the piezoelectric element material 43 of the piezoelectric element member 36 is deformed by vertical displacement of the lever 34 of the door disengagement/engagement operation unit 26 in accordance with the opening/closing operations of the outer door handle 23 and the inner door handle 24 as described above. The displaced lever 34 presses the outer circumferential surface of the piezoelectric element member 36 to thereby deform the piezoelectric element material 43.

The disconnection detection resistor 38 connected to one end of the piezoelectric element member 36 is connected between the center electrode 42 and the outer electrode 44 in the piezoelectric element member 36. The disconnection detection resistor 38 serves also as a discharge portion for discharging electric charge generated in the piezoelectric element member 36 by a pyroelectric effect, so that parts can be rationalized.

The body side control unit 28 fetching the detection signal of the piezoelectric element member 36 is constituted by a microcomputer and its peripheral circuits. The microcomputer has a CPU, and a nonvolatile memory in which a program for controlling the CPU and a security code are written. The body side control unit 28 includes a program for executing all control sequences of execution of the operation of the door open/close device. As shown in Fig. 1, the body side control unit 28 has the door disengagement/engagement judgment unit 39 receiving a signal from the door disengagement/engagement signal detection unit 27 for detecting undoing/doing of the door engagement unit 25, the body transmission/reception unit 46, the door opening/closing operator judgment unit 47 and the unlock/lock control unit 48, so as to form a keyless entry system.

As shown in Fig. 6, the door disengagement/engagement judgment unit 39 receives the output signal of the piezoelectric element member 36 and judges the signal of detection of undoing/doing of the door engagement unit 25 in accordance with the operation of opening/closing the door 21. That is, the door disengagement/engagement judgment unit 39 has a potential dividing resistor 49 used for detecting disconnection of the piezoelectric element member 36, a wave filter portion 50 for passing only a predetermined frequency component in the output signal of the piezoelectric element member 36, a judgment portion 51 for judging on the basis of the output signal of the wave filter portion 50 whether an object touches the piezoelectric element member 36 or not, and an abnormality judgment portion 52 for judging on the basis of a voltage value formed by the disconnection detection resistor 38 and the potential dividing resistor 49 whether disconnection abnormality occurs between the center electrode 42 and the outer electrode 44 in the piezoelectric element member 36 or not.

A signal input portion 53 of the door disengagement/engagement judgment unit 39 connects the center electrode 42 and the outer electrode 44 to the door disengagement/engagement judgment unit 39 so that the output signal of the piezoelectric element member 36 is input to the door disengagement/engagement judgment unit 39. A signal output portion 54 outputs a judgment signal of the judgment portion 51. An electric source line to the door disengagement/engagement judgment unit 39 and a ground line are connected to the signal output portion 54. The door disengagement/engagement judgment unit 39 further has bypass portions 55 such as capacitors provided between the signal input portion 53 and the signal output portion 54 for bypassing a high-frequency signal.

The wave filter portion 50 has wave filter characteristic by which an unnecessary signal caused by vibration of a vehicle body of a car is removed from the output signal of the piezoelectric element member 36 while only a peculiar frequency component appearing in the output signal of the piezoelectric element member 36 when the piezoelectric element member 36 is deformed by pressing caused by contact with foreign matter is extracted. For decision of the aforementioned wave filter characteristic, optimization is made while vibration characteristic of the vehicle body of the car and vibration of the vehicle body at the time of traveling are analyzed.

To remove external electric noise, the door disengagement/engagement judgment unit 39 is entirely covered with a shield member so as to be electrically shielded. The outer electrode 44 is connected to the shield member of the door disengagement/engagement judgment unit 39 so that the piezoelectric element member 36 is also electrically shielded. Incidentally, a feedthrough capacitor, an EMI filter, etc. may be added to the input/output portion of the aforementioned circuit so that measures can be made against intensive electric field.

As shown in Fig. 6, the door opening/closing operator judgment unit 47 has a security code signal request unit 57 for requesting the door opening/closing operator portable control unit 56 to send the security code signal through the body transmission/reception unit 46 in response to the judgment signal of the door disengagement/engagement judgment unit 39, a decryption unit 59 for decrypting the security code signal sent by the door opening/closing operator portable control unit 56 through the portable transmission/reception unit 58, and a security code signal judgment unit 61 for judging whether the security code signal decrypted by the decryption unit 59 is a legal security code signal set and stored in the memory 60 in advance.

When the security code signal judged by the security code signal judgment unit 61 indicates a legal operator, the unlock/lock control unit 48 controls the operation of the unlock/lock drive unit 62 to undo/do the door lock unit 22.

A notification unit 63 for notifying a result of the judgment of the door disengagement/engagement judgment unit 39 by a predetermined light or the like set in the front panel in the vehicle cabin and a manual inner door unlock/lock operation portion 64 for undoing/doing the door lock unit 22 to open/close the door 21 are connected to the unlock/lock control unit 48. An electric source 65 made of a car battery or the like for supplying electric power through the door disengagement/engagement judgment unit 39 is also provided.

The aforementioned keyless entry device basically operates to unlock the door 21 or unlock/lock the door 21 when the body side control unit 28 receives the security code signal transmitted after the door opening/closing operator portable control unit 56 serving as a portable side transmitter/receiver receives the security code request signal transmitted by the body side control unit 28 serving as a body side transmitter/receiver.

The door opening/closing operator portable control unit 56 has a portable transmission/reception unit 58 for transmitting/receiving electric wave of the same frequency as the body transmission/reception unit 46, a control unit (not shown) for controlling the portable transmission/reception unit 58, and an electric source circuit (not shown). The door opening/closing operator portable control unit 56 has a control unit not shown but for controlling the portable transmission/reception unit 58, a CPU, and a nonvolatile memory in which a program for controlling the CPU and a security code are written. When the portable transmission/reception unit 58 receives a security code request code from the security code signal request unit 57 of the body side control unit 28, the security code written in the nonvolatile memory is transmitted from the transmission/reception unit 58. Incidentally, an antenna coil (not shown) is provided in the portable transmission/reception unit 58.

As an electric source for the door opening/closing operator portable control unit 56, a primary battery such as a button battery may be used or configuration may be made to use energy induced in the antenna coil of the portable transmission/reception unit 58 by a carrier signal from the body transmission/reception unit 46.

The body transmission/reception unit 46 of the body side control unit 28 transmits/receives electric wave of the same frequency as the door opening/closing operator portable control unit 56. An antenna coil (not shown) is provided in the body transmission/reception unit 46. As shown in Figs. 1 and 6, the piezoelectric element member 36 serving as a door disengagement/engagement signal detection unit for detecting undoing/doing of the door engagement unit 25 by the door disengagement/engagement operation unit 26 interlocked with the operation of opening/closing the door 21 and the door lock unit 22 are connected to the body side control unit 28.

Undoing/doing of the door engagement unit 25 caused by opening/closing of the door 21 executed by the legal door opening/closing operator is monitored by the piezoelectric element member 36. When the change value is not smaller than a predetermined value, the body side control unit 28 operates so that an electric source is supplied to the body transmission/reception unit 46 from the battery through a relay box (not shown). As shown in Fig. 1, the key cylinder 66 is used for unlocking/locking the lock unit 22 by inserting a key (not shown) for starting the engine of the car and rotating the key. The key cylinder 66 is provided near the outer door handle 23 of the door 21.

In the door open/close device configured as described above, the operation and action thereof will be described. As shown in Figs. 2(a) and 2(b), when the outer door handle 23 or the inner door handle 24 is gripped, pulled ad rotated to open the door 21 closed in the body 20, the lever 34 is pulled up with the pivot 30 as its center through the outer wire 32 or the inner wire 33. As a result, the L-shaped hook 31 is moved down as represented by the arrow and disengaged from the U-shaped bracket 29, so that the door engagement unit 25 is undone. Thus, the door 21 is opened as shown in Fig. 3(a).

In the operation of the lever 34 until undoing of the door engagement unit 25, as shown in Fig. 3(b), the piezoelectric element member 36 is deformed and detects undoing of the door engagement unit 25 interlocked with the door opening operation, so that an electric signal is generated. The body side control unit 28 fetching the electric signal from the piezoelectric element member 36 controls the door disengagement/engagement judgment unit 39 to detect undoing of the door engagement unit 25 caused by the door opening operation and controls the security code signal request unit 57 to transmit a security code request signal.

Upon reception of the security code request signal, the door opening/closing operator portable control unit 56 controls the portable transmission/reception unit 58 to transmit a security code signal. Upon reception of the security code signal, the body side control unit 28 controls the decryption unit 59 to decrypt the security code signal and then controls the security code signal judgment unit 61 to judge the security code signal. When the security code signal is coincident with the security code signal stored in the memory 60, the unlock/lock control unit 48 transmits a signal to the unlock/lock drive unit 62. On the other hand, when the security code signal is not coincident and mismatching of the security code signal is judged by a predetermined number of times or more, an alarm is issued.

In this manner, the body side control unit 28 judges whether the door is opened/closed by a legal operator or not. When the door is opened/closed by a legal operator, the body side control unit 28 controls the door disengagement/engagement drive unit 46 to undo the door lock unit 22.

Moreover, as shown in Fig. 3(a), when the outer door handle 23 is gripped and the door 21 is pushed and closed toward the body 20 or the inner door handle 24 is gripped and the door 21 is pulled and closed toward the body 20 in order to close the door 21 opened from the body 20, the cam 35 strikes against the U-shaped bracket 29 and is pushed up with the pivot 30 as its center as represented by the arrow. In response to this, the L-shaped hook 31 engages with the U-shaped bracket 29 while rotating upward. As a result, the door engagement unit 25 is done, so that the door 21 is closed in the body 20 as shown in Fig. 2(a).

When the door engagement unit 25 is done, the piezoelectric element member 36 is deformed by the operation of the lever 34 as shown in Fig. 2(b). Thus, doing of the door engagement unit 25 interlocked with the door closing operation is detected, so that an electric signal is generated. The door disengagement/engagement judgment unit 39 of the body side control unit 28 fetching the electric signal from the piezoelectric element member 36 judges closing of the door. Upon reception of the judgment signal, the door opening/closing operator judgment unit 47 judges whether the door is operated to be closed by a legal operator or not in the same manner as the aforementioned door opening operation. When the door is operated to be closed by a legal operator, the unlock/lock control unit 48 controls the operation of the unlock/lock drive unit 62 to do the door lock unit 22.

Figs. 7(a) and 7(b) are graphs showing load applied on the piezoelectric element member 36 serving as the door disengagement/engagement signal detection unit 27 and signal output characteristic. The applicant has made an experiment concerned with the relation between load on the piezoelectric element member 36 and the signal output thereof. As a result, when bending load as shown in Fig. 7(a) is applied on the piezoelectric element member 36, the signal output exhibits change as shown in Fig. 7(b).
(1) When load is not applied on the piezoelectric element member 36 at time t0, the signal output exhibits a voltage Va.
(2) When bending load is applied on the piezoelectric element member 36 at time t1, the signal output increases to Vb instantaneously. Then, the signal output is inverted to 0 (V) soon and then returned to Va.
(3) Then, the output signal is kept at Va even in the case where the piezoelectric element member 36 is kept bent.
(4) When the piezoelectric element member 36 is restored to its original state at time t3, the sensor output is reduced to Vc instantaneously. Then, the sensor output is inverted to Vd soon and then returned to Va.

In this manner, the piezoelectric element member 36 can detect an output sensitively in response to acceleration. Accordingly, the piezoelectric element member 36 can detect fine vibration accurately and output the fine vibration. Incidentally, for detection of load applying timing, for example, a judgment threshold of a predetermined voltage width ΔV with the illustrated voltage Va as its center may be provided so that load can be judged to be changed when the detected voltage exceeds the judgment threshold.

Particularly in the door open/close device according to this embodiment, the door disengagement/engagement signal detection unit 27 generates a signal in response to the operation of the door disengagement/engagement operation unit 26 interlocked with the operation of opening/closing the door 21 externally or internally. Upon reception of the signal, the body side control unit 28 controls undoing/doing of the door lock unit 22. Accordingly, the door can be unlocked/locked simultaneously with the external or internal door opening/closing operation. The external or internal door opening/closing operation can be made without any trouble compared with the background art. That is, the external or internal door opening/closing operation can be made with ease.

Moreover, in this embodiment, the door disengagement/engagement signal detection unit 27 is provided as one means for detecting both the external door opening/closing operation and the internal door opening/closing operation. Accordingly, the door disengagement/engagement signal detection unit 27 generates a signal in response to the operation of the door disengagement/engagement operation unit interlocked with the external or internal door opening/closing operation. Accordingly, the door disengagement/engagement signal detection unit 27 can be used in common to detection of the external door opening/closing operation and detection of the internal door opening/closing operation, so that configuration can be simplified. Moreover, the door opening/closing operation can be detected without any variation, so that the door opening/closing operation can be made stably.

Moreover, in this embodiment, the door disengagement/engagement signal detection unit 27 is provided in a position where a signal is generated in response to the operation of the lever 34 which is a common portion interlocked with the external and internal door opening/closing operations. Although undoing/doing of the door engagement unit 25 can be detected in response to the external or internal door opening/closing operation, the door disengagement/engagement signal detection unit 27 can be provided in one place so that it can be set easily.

Moreover, in this embodiment, the door disengagement/engagement signal detection unit 27 is provided in the inside of the door 21. Accordingly, the space for installation of the door disengagement/engagement signal detection unit 27 is widened compared with the inside of the inner ad outer door handles gripped at the time of opening/closing the door, so that limitation in space can be lightened. The door disengagement/engagement signal detection unit 27 can be installed easily.

Moreover, it is not necessary to incorporate the door disengagement/engagement signal detection unit 27 in the door handles. Accordingly, it is not necessary to provide a hollow portion of a predetermined size in each door handle for incorporating the door disengagement/engagement signal detection unit 27 in the door handle. The shape and size of the door handle can be designed freely while importance is given to gripping characteristic, external appearance design, etc. at the time of operating the door handle. The degree of freedom for design of the shape and size of the door handle can be made high.

Moreover, in this embodiment, the door disengagement/engagement signal detection unit 27 is constituted by the piezoelectric element member 36 which is arranged so that the piezoelectric element member 36 is deformed by the operation of the door disengagement/engagement operation unit 26 and outputs an electric signal. Accordingly, sensitivity in detection of both the external door opening/closing operation and the internal door opening/closing operation can be made higher. The timing for undoing/doing the door engagement unit 25 and the timing for undoing/doing the door lock unit 22 due to the outer door handle 23 and the inner door handle 24 can be optimized easily, so that the handing property for opening/closing the door can be improved.

There is no risk that approach of an article unrelated to the door opening/closing operation will be detected by mistake compared with the capacitance type handle operation detection sensor according to the background art. Accordingly, detection sensitivity can be set so high that the presence/absence of the door opening/closing operation can be detected sensitively in response to slight displacement of the lever 34 integrally displaced with the door engagement unit 25. Even in the case where the outer door handle 23 and the inner door handle 24 are gripped weakly at the time of opening/closing the door 21, the presence/absence of the door opening/closing operation can be detected surely.

Moreover, the detection signal is not output unless the piezoelectric element material 43 of the piezoelectric element member 36 is deformed by the displacement behavior of the lever 34 integrally displaced with the door engagement unit 25. Accordingly, release of noise to the environment due to idle signal transmission can be prevented.

Moreover, the door disengagement/engagement signal detection unit 27 using the piezoelectric element member 36 can be operated stably with a consumed current not higher than 1 mA. Accordingly, the burden on the on-vehicle battery can be lightened by reduction in consumed current compared with the capacitance type handle operation detection sensor according to the background art.

The form of engagement between the piezoelectric element member 36 and the lever 34 for deforming the piezoelectric element member 36 is not limited to the aforementioned embodiment.

Moreover, in this embodiment, the bent portions 36a on which tension is applied are provided in the piezoelectric element member 36. Each bent portion 36a is arranged so that the bent portion 36a is deformed by the operation of the door disengagement/engagement operation unit 26. Accordingly, the piezoelectric element member 36 has the bent portions 36a on which tension is applied so that detection sensitivity is made high and which are deformed by the operation of the door disengagement/engagement operation unit 26. Accordingly, sensitivity in detection of both the external door opening/closing operation and the internal door opening/closing operation is improved more greatly. The timing for undoing/doing the door engagement unit and the timing for undoing/doing the door lock unit due to the outer door handle or the inner door handle can be optimized easily, so that the handing property for opening/closing the door can be improved.

In the keyless entry device according to the embodiment, high-sensitive detection can be made. Disturbance due to reveal of the electrode has little influence. The door less in restriction of the installation place is provided as a main constituent member. The door open/close device can be operated by only the operation of the outer door handle 23 and the inner door handle 24. Moreover, because there is no contact bonding stroke, no time lag between the moment of the door opening/closing operation and the operation of the door disengagement/engagement signal detection unit is generated. Accordingly, the time until the unlock/lock control unit 48 of the body side control unit undoes/does the door lock unit 22 after the door opening/closing operation can be shortened greatly, so that the lock unit 22 can be undone/done in response to rapid opening/closing of the door.

Although this embodiment has been described upon the case where the lever 30 is used as a common portion for deforming the piezoelectric element member 36, a cam 35 or an L-shaped hook 31 may be used instead and the same operation and effect as in this embodiment can be expected.

Although the door open/close device according to this embodiment has been described upon the case where the door lock unit 22 is undone/done at the same time that the door engagement unit 25 is undone/done by the external or internal door opening/closing operation, there may be provided a door open/close device in which the door lock unit is only undone at the same time that the door engagement unit is undone by the external or internal door opening operation. In such a door open/close device, the door disengagement/engagement operation unit 26 in this embodiment is replaced with a door disengagement operation unit, the door disengagement/engagement signal detection unit 27 is replaced with a door disengagement signal detection unit, the door disengagement/engagement judgment unit 39 is replaced with a door disengagement judgment unit, and the door opening/closing operator judgment unit 47 is replaced with a door opening operator judgment unit.

The door disengagement signal detection unit generates a signal in response to the operation of the door disengagement operation unit interlocked with both the external door opening operation and the internal door opening operation. Upon reception of this signal, the body side control unit unlocks the door lock unit. Accordingly, the door can be unlocked simultaneously with the external or internal door opening. The external or internal door opening can be made easily without any trouble compared with the background art. In addition, the same operation and effect as in this embodiment at the time of opening the door can be expected.

Although the door open/close device according to this embodiment has been described upon the case where the door open/close device is mounted in a car, the door open/close device may be applied to a door open/close device in a house as a building in which a person goes in and out while externally opening/closing a door, a storehouse, a business refrigerator, a ship, an airplane, a safe having a door only externally opened/closed, etc.

Although the door open/close device according to this embodiment has been described upon the case where the piezoelectric element member 36 is deformed to obtain acceleration by the lever 30, the cam 35 or the L-shaped hook 31 which is a common portion interlocked with the operation of the outer door handle 23 and the inner door handle 24 for opening/closing the door 21, the piezoelectric element member 36 may be configured so that detection can be made through a lever 30, a cam 35 or an L-shaped hook 31 which is a common portion receiving vibration propagating by the operation of pulling, pushing or touching the outer door handle 23 and the inner door handle 24.

### (Embodiment 2)

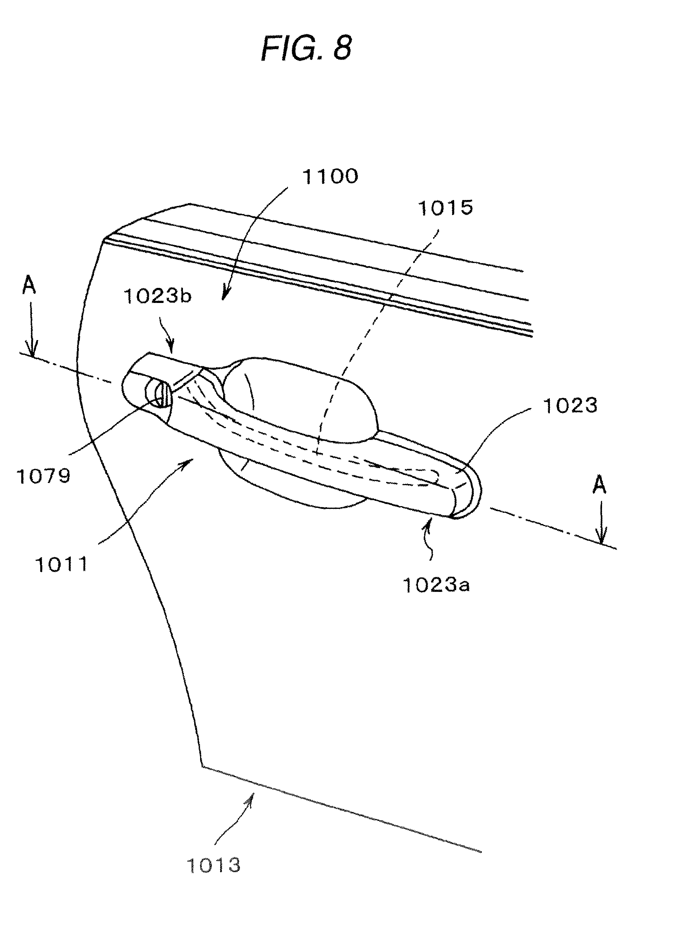

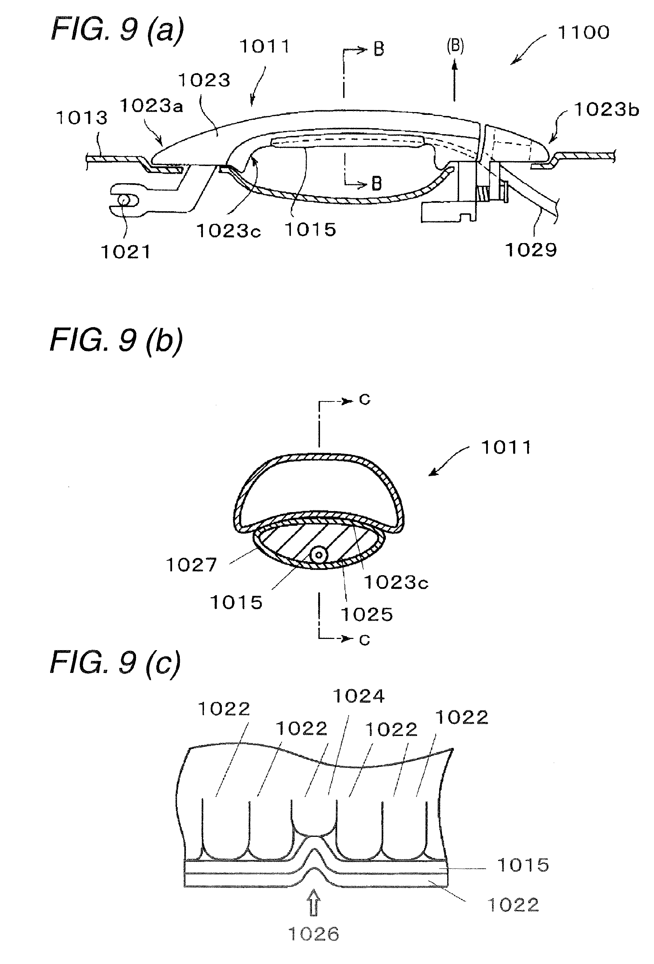

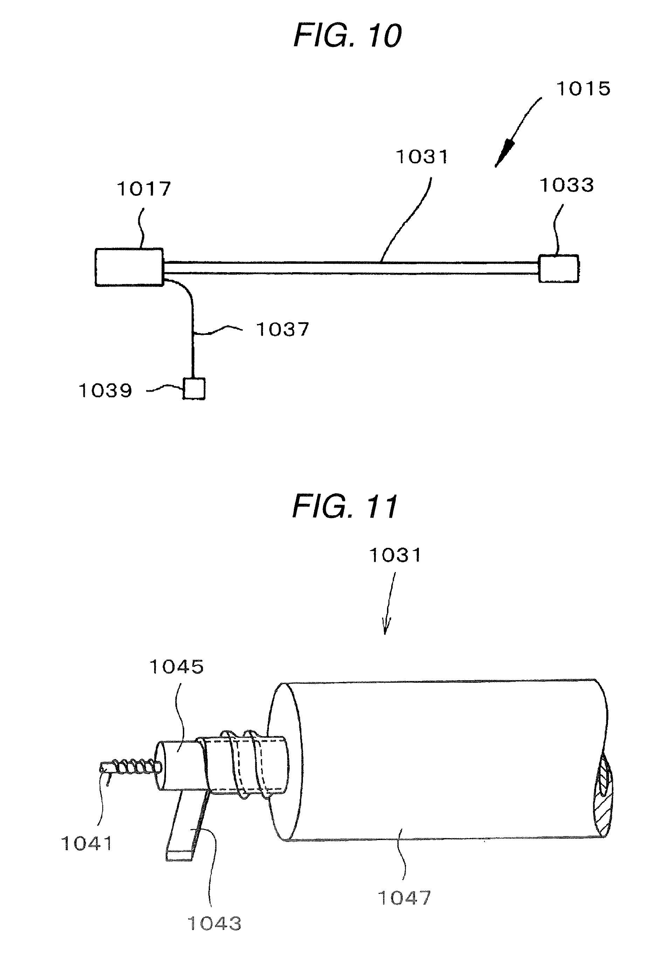

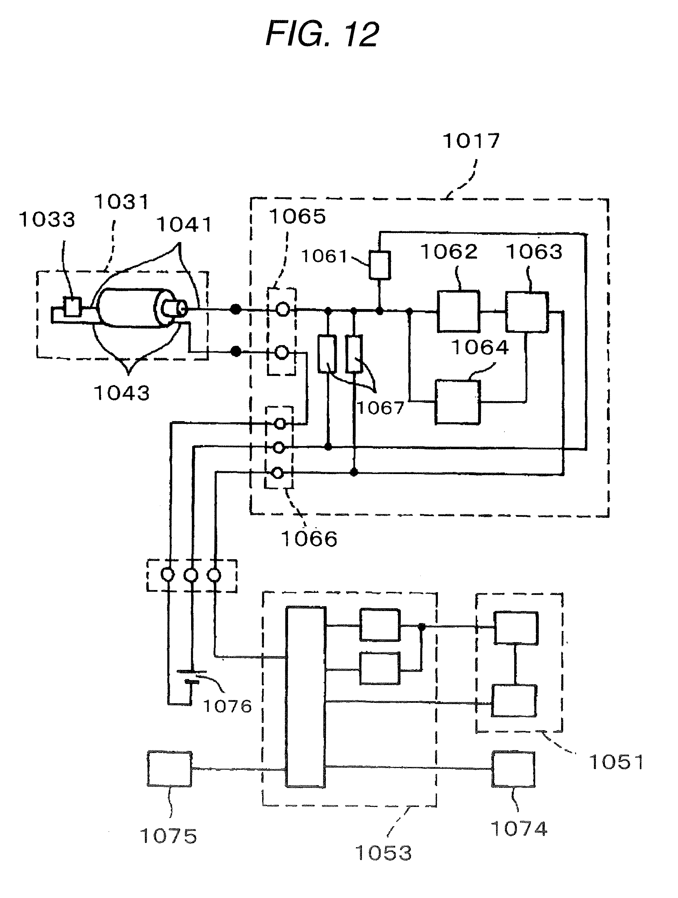

Fig. 8 is an external appearance perspective view showing a door open/close device according to a second embodiment of the invention. Fig. 9(a) is an internal configuration view showing an A-A section in Fig. 8. Fig. 9(b) is an internal configuration view showing a B-B section in Fig. 9(a). Fig. 9(c) is an internal configuration view showing a C-C section in Fig. 9(b). Fig. 10 is a schematic configuration view of a piezoelectric sensor depicted in Fig. 9. Fig. 11 is a configuration view of a piezoelectric element member. Fig. 12 is a block diagram of a door handle device.

As shown in Fig. 8, the door handle device 1100 according to the second embodiment is provided in a door 1013 having a handle 1011 for an opening/closing operation. A door lock unit not shown but for locking the opening operation of the door 1013 can be undone by the operation of the handle 1011. The door handle device 1100 has a piezoelectric sensor 1015 and a judgment unit 1017 as chief constituent members. The piezoelectric sensor 1015 is disposed in the handle 1011 and made of a piezoelectric element having flexibility. The judgment unit 1017 (see Figs. 10 and 12) which will be described later is a control portion for undoing the door lock unit in response to a detection signal from the piezoelectric sensor 1015 due to contact load 1026 when a handle body 1023 is gripped by a hand inserted between the door 1013 and the handle body 1023.

The door handle device 1100 is incorporated in a vehicle door (outer door panel) 1013. The handle 1011 has a handle body 1023 having one end side 1023a rotatably supported to the door 1013 through a support shaft 1021, and the other end side 1023b moved in a drawing direction by the rotation. That is, a pull-rise type handle 1011 having a hinge on one side is formed. The piezoelectric sensor 1015 is disposed on a surface 1023c of the handle body 1023 facing the door 1013 so that deformation of the piezoelectric sensor 1015 due to the gripping operation of the handle body 1023 can be detected. Incidentally, 1079 in Fig. 9(a) designates a key cylinder casing provided on the rear side of the handle body 1023.

In this embodiment, the piezoelectric sensor 1015 is covered with a tube-like coating material 1027 with interposition of a cushioning material 1025 as shown in Fig. 9(b). That is, the coating material 1027 is bonded to the surface 1023c of the handle body 1023 facing the door 1013. The piezoelectric sensor 1015 is formed so that a cable portion 1029 led out of the other end side 1023b of the handle body 1023 is led into the door 1013 and connected to the judgment unit 1017.

Fig. 9(c) is an enlarged view of the cushioning material 1025, the piezoelectric sensor 1015 and the coating material 1027 in a C-C section in Fig. 9(b). As shown in Fig. 9(c), the cushioning material 1025 as an upper portion of the piezoelectric sensor 1015 has a plurality of notches 1022 on a side facing the piezoelectric sensor. Portions 1024 partitioned by the notches 1022 can be deformed independently of one another. The cushioning material 1025 can be bent easily compared with a cushioning material having no notch.

When the handle body 1023 is gripped by a handle inserted between the door 1013 and the handle body 1023, contact load 1026 is generated on the cushioning material 1025, the piezoelectric sensor 1015 and the coating material 1027. On this occasion, because the cushioning material 1025 has portions which can be deformed independently of one another, deformation of the piezoelectric sensor 1015 due to the contact load 1026 can hardly be prevented, so that deformation of the piezoelectric sensor 1015 becomes larger.

As shown in Fig. 10, the piezoelectric sensor 1015 has a predetermined-length cable-like piezoelectric element member 1031, a disconnection detection resistor 1033 connected to one end of the piezoelectric element member 1031, a judgment unit 1017 connected to the other end of the piezoelectric element member 1031, a cable 1037 connected to the judgment unit 1017, and a connector 1039 connected to a leading end of the cable 1037. The cable 1037 connected to the judgment unit 1017 is provided for electric source supply and detection signal output and connected to an electric source and a communication terminal through the connector 1039 provided at the leading end of the cable 1037.

The piezoelectric element member 1031 used in the piezoelectric sensor 1015 has a structure shown in Fig. 11. The piezoelectric element member 1031 has a core (center electrode) 1041 in the axial center, a piezoelectric element material (composite piezoelectric layer) 1045 as piezoelectric ceramics applied around the center electrode 1041, an outer electrode 1043 further disposed around the piezoelectric element material 1045, and a coating layer 1047 of PVC (polyvinyl chloride resin) or the like applied on the outermost circumference. The piezoelectric element member 1031 has excellent flexibility and generates an output signal in accordance with deformation acceleration at the time of deformation. Sintered powder of lead titanate or lead titanate zirconate or lead-free piezoelectric ceramic sintered powder such as sodium niobate, etc. is used as the piezoelectric ceramics.

In the aforementioned cable-like piezoelectric sensor 1015, a heat-resistant resin material uniquely developed by the Applicant so that the material can be used up to a temperature of 120°C is used as the piezoelectric element material 1045. The piezoelectric element material 1045 can be used in a higher temperature range (120°C or lower) than 90°C which is the maximum use temperature of the conventionally representative high-molecular piezoelectric element material (uniaxial stretched polyvinylidene fluoride) or piezoelectric element material (piezoelectric element material of chloroprene and piezoelectric ceramic powder). The piezoelectric element material 1045 is composed of flexible resin and piezoelectric ceramics. Moreover, flexible electrodes composed of a coil-like metal center electrode and a film-like outer electrode are used. Accordingly, the cable-like piezoelectric sensor 1015 has flexibility as equal as a general vinyl cord.

The piezoelectric element material 1045 is provided as a composite of a resin material and piezoelectric ceramic powder not larger than 10 µm. Vibration detection characteristic is achieved by the ceramic while flexibility is achieved by the resin. In the piezoelectric element material 1045, chlorinated polyethylene is used as the resin material so that high-temperature resistance (120°C) and plasticity for easy formability can be achieved and that a simple production process without necessary of crosslinking can be provided.

The cable-like piezoelectric sensor 1015 obtained thus has no piezoelectric performance when the piezoelectric element material 1045 is molded. It is therefore necessary to apply a DC high voltage of several kV/mm on the piezoelectric element material 1045 to thereby perform a process (polarizing process) for giving piezoelectric performance to the piezoelectric element material 1045. When the piezoelectric element material 1045 includes fine defects such as cracks, electric discharge occurs in the defect portions to short-circuit the two electrodes easily. Accordingly, it is impossible to apply a sufficient polarizing voltage. In the invention, however, a unique polarizing process using an auxiliary electrode which can be brought into contact with the piezoelectric element material 1045 with a predetermined length is established so that polarization can be stabilized while defects are detected and avoided. As a result, the size of the cable-like piezoelectric sensor 1015 can be increased to the order of tens of meters or more.

In the piezoelectric cable sensor, a coil-like metal center electrode is used as the center electrode 1041, and a film-like electrode (aluminum-polyethylene terephthalate-aluminum three-layer laminate film) is used as the outer electrode 1043. As a result, the piezoelectric element material 1045 and the electrode can be kept in contact with each other. Moreover, an outer lead wire can be connected easily. Flexible cable-like mounting can be made.

The center electrode 1041 is a copper-silver alloy coil. The outer electrode 1043 is a three-layer laminate film of aluminum-polyethylene terephthalate-aluminum. The piezoelectric element material 1045 is powder of polyethylene-based resin and piezoelectric ceramic. The shell is a thermoplastic resin. As a result, a relative dielectric constant of 55, a charge generation quantity of 10 to 13C (coulomb)/gf and a maximum use temperature of 120°C can be obtained.

For example, the aforementioned piezoelectric element member 1031 is produced by the following process. First, a chlorinated polyethylene sheet and 40 to 70 % by volume of piezoelectric ceramics (e.g. lead titanate zirconate) powder are mixed homogeneously in the form of a sheet by a rolling method. After the sheet is cut into fine pellets, the pellets are continuously extruded together with the center electrode 1041 to thereby form a composite piezoelectric layer 1045. While the auxiliary electrode is brought into contact with the outer circumference of the composite piezoelectric layer 1045, a high voltage is applied between the auxiliary electrode and the center electrode 1041 to perform a polarizing process. Then, the outer electrode 1043 is wound around the composite piezoelectric layer 1045. The coating layer 1047 surrounding the outer electrode 1043 is also continuously extruded.

When piezoelectric ceramic powder is added to the chlorinated polyethylene, it is preferable that the piezoelectric ceramic powder is immersed in a solution of a titan coupling agent and dried in advance. By this treatment, the surface of the piezoelectric ceramic powder is covered with hydrophilic groups and hydrophobic groups contained in the titan coupling agent. The hydrophilic groups prevent particles of piezoelectric ceramic powder from being aggregated. The hydrophobic groups increase wettability between chlorinated polyethylene and piezoelectric ceramic powder. As a result, a large quantity of piezoelectric ceramic powder up to 70 % by volume at the maximum can be added to chlorinated polyethylene homogeneously. It has been found that the same effect as described above can be obtained when a titan coupling agent is added at the time of rolling chlorinated polyethylene and piezoelectric ceramic powder instead of immersion in the titan coupling agent solution. This treatment is excellent in that the process of immersion in the titan coupling agent solution is not particularly required. In this manner, chlorinated polyethylene plays a role of a binder resin for mixing piezoelectric ceramic powder.

In the case of this embodiment, a single conductor wire made of copper-based metal is used as the center electrode 1041. A belt-like electrode having an aluminum metal film bonded onto a high-molecular layer is used as the outer electrode 1043. The outer electrode 1043 is wound around the composite piezoelectric layer 1045. Polyethylene terephthalate (PET) is used as the high-molecular layer. An electrode having an aluminum thin film bonded onto PET is preferred as the outer electrode 1043 because the electrode can be mass-produced commercially and at low cost. This electrode can be connected to the judgment unit 1017, for example, by caulking or eyeleting. A metal single wire coil or a metal braided wire may be soldered around the aluminum thin film of the outer electrode 1043 for connection to the judgment unit 1017. Because soldering can be made, working efficiency can be attained. Incidentally, to shield the piezoelectric element member 1031 from electric noise in the external environment, the outer electrode 1043 is preferably wound around the composite piezoelectric layer 1045 so that parts of the outer electrode 1043 overlap one another.

A rubber material more excellent in heat insulation and waterproofness than the aforementioned vinyl chloride resin may be used as the coating layer 1047. As the rubber material, a material higher in plasticity and flexibility than the composite piezoelectric layer 1045 is preferably used so that the composite piezoelectric layer 1045 can be deformed easily by pressing force of an article brought into contact with the rubber material. On-vehicle parts are selected in consideration of heat resistance and low-temperature resistance. Specifically, parts less reduction in flexibility in a range of from -30°C to 85°C are preferably selected. For example, ethylene-propylene rubber (EPDM), chloroprene rubber (CR), butyl rubber (IIR), silicone rubber (Si), thermoplastic elastomer, etc. may be used as the rubber material. According to the aforementioned configuration, the minimum radius of curvature of the piezoelectric element member 1031 can be increased up to 5 mm, so that more excellent heat insulation and waterproofness can be kept compared with the vinyl chloride.

As described above, because the composite piezoelectric substance of the piezoelectric element member 1031 has both flexibility like chlorinated polyethylene and high-temperature durability like piezoelectric ceramics, lowering of sensitivity at a high-temperature in the background-art piezoelectric sensor using polyvinylidene fluoride as a piezoelectric substance can be avoided so that the composite piezoelectric substance is excellent in high-temperature durability. Moreover, because a vulcanization process at the time of molding rubber such as EPDM is not required, so that there can be obtained an advantage that the composite piezoelectric substance is excellent in production efficiency.

As shown in Fig. 12, the judgment unit 1017 for detecting the presence/absence of the door opening/closing operation on the basis of the output signal of the piezoelectric element member 1031 is provided with an open/close drive unit 1051 for doing/undoing the door lock device and an open/close control unit 1053 for controlling the operation of the open/close drive unit 1051. These form a background-art keyless entry system.

The judgment unit 1017 has a potential dividing resistor 1061 used for detecting disconnection of the piezoelectric element member 1031, a wave filter portion 1062 for passing only a predetermined frequency component from the output signal of the piezoelectric element member 1031, a judgment portion 1063 for judging contact of the piezoelectric element member 1031 with an object on the basis of the output signal of the wave filter portion 1062, and an abnormality judgment portion 1064 for judging abnormality of disconnection between the center electrode 1041 and the outer electrode 1043 in the piezoelectric element member 1031 on the basis of the voltage value generated by the disconnection detection resistor 1033 and the potential dividing resistor 1061.

A signal input portion 1065 for connecting the center electrode 1041 and the outer electrode 1043 to the judgment unit 1017 and inputting the output signal of the piezoelectric element member 1031 to the judgment unit 1017 and a signal output portion 1066 for outputting the judgment signal of the judgment portion 1063 are adjacently disposed in the judgment unit 1017. An electric source line to the judgment unit 1017 and a ground line are also connected to the signal output portion 1066. The judgment unit 1017 further has bypass portions 1067 such as capacitors provided between the signal input portion 1065 and the signal output portion 1066 for bypassing a high-frequency signal.

A notification unit 1074 for notifying a result of the judgment based on the judgment unit 1017 by a predetermined light or the like disposed in the front panel in the cabin and an open/close switch 1075 for opening/closing the door are also connected to the open/close control unit 1053. An electric source 1076 made of a car battery or the like for supplying electric power through the judgment unit 1017 is provided.

The wave filter portion 1062 has wave filter characteristic by which an unnecessary signal caused by vibration etc. of a vehicle body of a car is removed from the output signal of the piezoelectric element member 1031 while only a peculiar frequency component appearing in the output signal of the piezoelectric element member 1031 when the piezoelectric element member 1031 is deformed by pressing caused by contact with foreign matter is extracted. For decision of the wave filter characteristic, optimization is made while vibration characteristic of the vehicle body of the car and vibration of the vehicle body at the time of traveling are analyzed.

To remove external electric noise, the judgment unit 1017 is entirely covered with a shield member so as to be electrically shielded. The outer electrode 1043 is connected to the shield member of the judgment unit 1017 so that the piezoelectric element member 1031 is also electrically shielded. Incidentally, a feedthrough capacitor, an EMI filter, etc. may be added to the input/output portion of the aforementioned circuit so that measures can be made against intensive electric field.

In the aforementioned door handle device 1100, when the handle body 1023 gripped with a hand or a finger is pulled out in the direction of the arrow (B) as shown in Fig. 9(a), the piezoelectric sensor 1015 is deformed together with the independently deformable portions 1024. The judgment unit 1017 judges the presence/absence of the door opening/closing operation on the basis of the output signal of the piezoelectric element member 1031 due to the deformation to thereby control the operation of the open/close drive unit 1051.

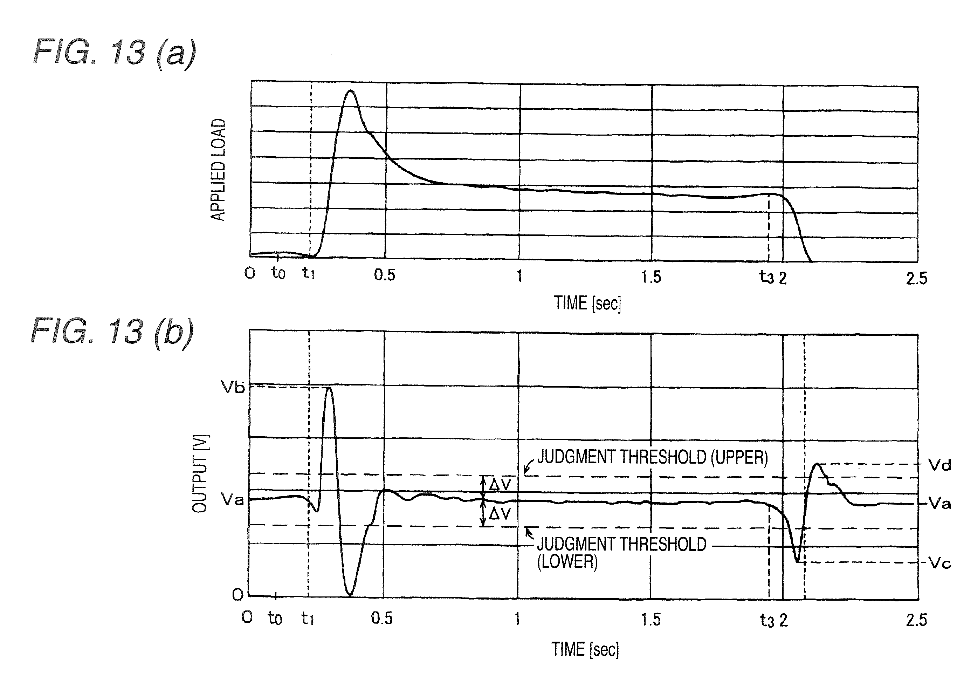

Fig. 13(a) is a graph showing load applied on the piezoelectric sensor 1015 and sensor output characteristic. The applicant has made an experiment concerned with the relation between load on the piezoelectric sensor 1015 and the sensor output thereof. As a result, when bending load as shown in Fig. 13(a) is applied on the piezoelectric sensor 1015, the sensor output exhibits change as shown in Fig. 13(b).

(1) When load is not applied on the piezoelectric sensor 1015 at time t₀, the sensor output exhibits a voltage Va.

(2) When bending load in a predetermined direction is applied on the piezoelectric sensor 1015 at time t₁, the sensor output increases to Vb instantaneously. Then, the sensor output is inverted to 0 (V) soon and then returned to Va.

(3) Then, the sensor output is kept at Va even in the case where the piezoelectric sensor 1015 is kept bent.
(4) When the piezoelectric sensor 1015 is restored to its original state at time t₃, the sensor output is reduced to Vc instantaneously. Then, the sensor output is inverted to Vd soon and then returned to Va.

In this manner, the piezoelectric sensor 1015 can detect an output sensitively in response to acceleration. Accordingly, the piezoelectric sensor 1015 can detect fine vibration accurately and output the fine vibration. Incidentally, for detection of load applying timing, for example, a judgment threshold of a predetermined voltage width ΔV with the illustrated voltage Va as its center may be provided so that load can be judged to be changed when the detected voltage exceeds the judgment threshold.

In the door handle device 1100 according to the second embodiment as described above, when the piezoelectric element member 1031 which is a constituent member of the piezoelectric sensor 1015 is deformed by gripping the handle body 1023 with a hand, the presence/absence of the door opening/closing operation can be detected. It is not necessary to incorporate the piezoelectric sensor 1015 per se in the handle body 1014. Accordingly, it is not necessary to provide a hollow portion of a predetermined size in the handle body 1014 for incorporating the piezoelectric sensor 1015 therein. The shape and size of the handle body 1014 can be designed freely while importance is given to gripping characteristic, external appearance design, etc. at the time of operating the handle body 1014. The degree of freedom for design of the shape and size of the handle body 1014 can be made high.

Moreover, the aforementioned piezoelectric sensor 1015 detects the presence/absence of the opening/closing operation by deformation of the piezoelectric element material 1049 of the piezoelectric element member 1031 when the handle body 1023 is gripped with a handle at the time of opening/closing the door. There is no risk that approach of an article unrelated to the door opening/closing operation will be detected by mistake compared with the capacitance type handle operation detection sensor according to the background art.

Accordingly, detection sensitivity can be set so high that the presence/absence of the opening/closing operation can be detected sensitively in response to slight displacement of the piezoelectric sensor 1015 when the handle body is gripped. The presence/absence of the door opening/closing operation can be detected. Even in the case where a hand touches the door handle 1023 weakly at the time of opening/closing the door, the presence/absence of the opening/closing operation can be detected surely.

Particularly in this embodiment, the piezoelectric sensor 1015 is disposed in the handle body through a cushioning material having portions deformed independently of one another. Accordingly, larger deformation can be made in the piezoelectric sensor 1015 in spite of slight displacement. Accordingly, the presence/absence of the opening/closing operation can be detected more surely.

Moreover, in the aforementioned piezoelectric sensor 1015, the detection signal is not output unless the piezoelectric element material 1049 of the piezoelectric element member 1031 is deformed by gripping the handle body 1023 with a hand. Accordingly, release of noise to the environment due to idle signal transmission can be prevented.

Moreover, the piezoelectric sensor 1015 using the piezoelectric element member 1031 according to the invention can be operated stably with a consumed current not higher than 1 mA. Accordingly, the burden on the on-vehicle battery can be lightened by reduction in consumed current compared with the capacitance type piezoelectric sensor 1015 according to the background art.

Because it is not necessary to reveal the electrodes, the influence of disturbance or deposited dust, rain, snow, etc. can be restrained.

Although this embodiment is configured so that the cushioning material 1025 as the upper portion of the piezoelectric sensor 1015 has a plurality of notches 1022, configuration may be made so that a plurality of independently deformable portions 1024 are provided. For example, the independently deformable portions 1024 may be constituted by a cushioning material 1025 partitioned into parts.

Although configuration is made so that the plurality of notches 1022 are provided only in the upper portion of the piezoelectric sensor 1015, a cushioning material 1025 may be also provided between the piezoelectric sensor 1015 and the coating material 1027 so that a plurality of notches 1022 are provided in the lower portion of the piezoelectric sensor 1015 or in both the lower and upper portions of the piezoelectric sensor 1015.

### (Embodiment 3)

A door handle device according to a third embodiment of the invention will be described below.

In this embodiment, parts the same as those in the second embodiment are referred to by numerals the same as those in the second embodiment for the sake of omission of duplicated description.

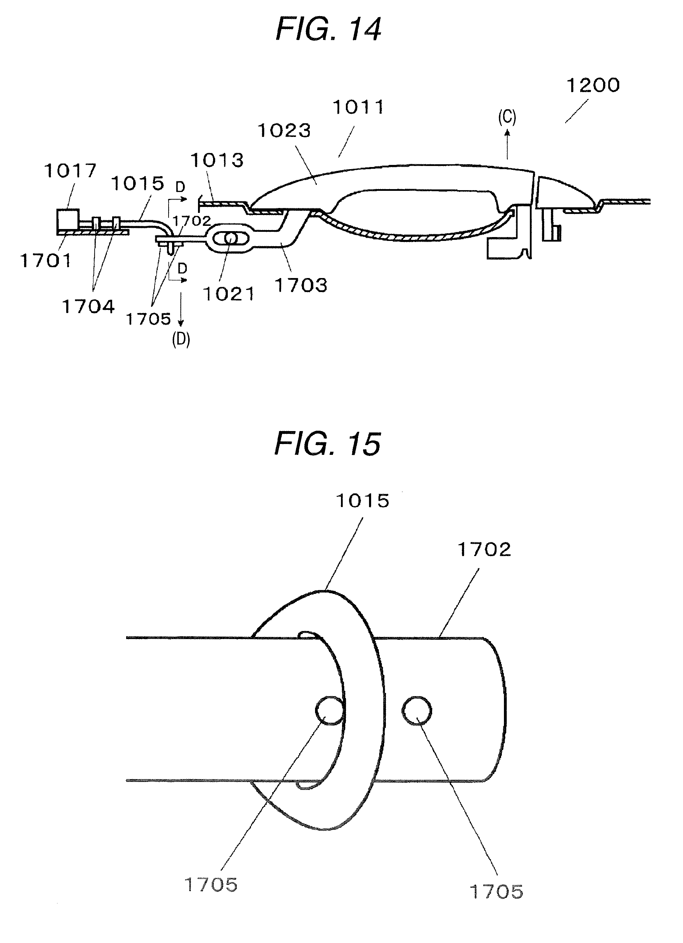

Fig. 14 is a sectional view showing the door handle device according to Embodiment 3.

The handle 1011 includes an arm portion 1703, and a handle body 1023. The arm portion 1703 is a support portion having one end side rotatably supported to the door through a support shaft 1021. The handle body 1023 moves the other end side in the direction (C) as a direction of pulling out the door 1013 because the support portion 1021 is rotatably supported. Moreover, a lever portion 1702 is a rod-like member which is attached to a side of the arm portion 1703 opposite to the handle body 1023 with respect to the support shaft so that the arm portion 1703 is extended. Moreover, a piezoelectric sensor 1015 is disposed in the lever portion 1702 by protrusions 1705. The piezoelectric sensor 1015 is disposed on a board 1701 through clamps 1704 and connected to the judgment unit 1017 disposed in the board 1701.

Fig. 15 is a view from D-D arrows in Fig. 14. As shown in Fig. 14, a part of the piezoelectric sensor 1015 is wound on the outer circumference of the lever portion 1702. The piezoelectric sensor 1015 is positioned on the outer circumferential surface of the lever portion 1702 by a pair of protrusions 1705 protruded from the outer circumference of the lever portion 1702. When the lever portion 1702 is displaced in the direction of the arrow (D) in accordance with the operation of the handle body 1023, the pair of protrusions 1705 press the outer circumferential surface of the piezoelectric sensor 1015 to thereby deform the piezoelectric sensor 1015.

That is, in the door handle device according to Embodiment 3, when the handle body 1023 gripped with a hand is pulled out in the direction of the arrow (C), the lever portion 1702 is displaced in the direction of the arrow (D) through the support shaft 1021. The piezoelectric sensor 1015 wound on the lever portion 1702 is pressed against the pair of protrusions 1705, so that the piezoelectric sensor 1015 is deformed. The judgment unit 1017 judges the presence/absence of the door opening/closing on the basis of the output signal of the piezoelectric sensor 1015 on this occasion. Thus, the operation of the open/close drive unit 1051 is controlled.

In the aforementioned door handle device 1200 according to Embodiment 3, the displacement of the handle body 1023 pulled out can be converted into the displacement of the lever portion 1702. When the lever portion 1702 is formed to have a predetermined length, sufficient displacement can be given to the deformation of the piezoelectric sensor 1015. The presence/absence of the door opening/closing operation can be detected surely.

Because the piezoelectric element member 1031 which is a constituent member of the piezoelectric sensor 1015 can detect the presence/absence of the door opening/closing operation by being deformed due to the displacement of the lever portion 1702 interlocked with the handle body 1023, it is not necessary to incorporate the piezoelectric sensor 1015 per se in the handle body 1023. Accordingly, it is not necessary to provide a hollow portion of a predetermined size in the handle body 1023 for incorporating the piezoelectric sensor 1015 therein. The shape and size of the handle body 1023 can be designed freely while importance is given to gripping characteristic, external appearance design, etc. at the time of operating the handle body 1023. The degree of freedom for design of the shape and size of the handle body 1023 can be made high.

Moreover, the aforementioned piezoelectric sensor 1015 detects the presence/absence of the opening/closing operation by deformation of the piezoelectric element material 1045 of the piezoelectric element member 1031 due to the lever portion 1702 integrally displaced by a predetermined distance together with the handle body 1023 at the time of opening/closing the door. There is no risk that approach etc. of an article unrelated to the door opening/closing operation will be detected by mistake compared with the capacitance type handle operation detection sensor according to the background art.

Accordingly, detection sensitivity can be set so high that the presence/absence of the opening/closing operation can be detected sensitively in response to slight displacement of the lever portion 1702. Even in the case where a hand or a finger touches the door handle 1023 weakly at the time of opening/closing the door, the presence/absence of the door opening/closing operation can be detected surely.

Moreover, in the aforementioned piezoelectric sensor 1015, the detection signal is not output unless the piezoelectric element material 1045 of the piezoelectric element member 1031 is deformed by displacement behavior of the lever portion 1702 integrally displaced with the handle body 1023. Accordingly, release of noise to the environment due to idle signal transmission can be prevented.

Moreover, the piezoelectric sensor 1015 using the piezoelectric element member 1031 according to the invention can be operated stably with a consumed current not higher than 1 mA. Accordingly, the burden on the on-vehicle battery can be lightened by reduction in consumed current compared with the capacitance type handle operation detection sensor 1016 according to the background art.

Incidentally, the lever portion 1015 integrally displaced with the handle body 1023 at the time of the opening/closing operation of the handle body 1023 is not limited to the aforementioned embodiment. For example, a lever portion may be provided so as to have a predetermined angle with respect to the arm portion 1703 and the support shaft 1021 while a piezoelectric sensor may be provided in an easily set place.

The form of engagement between the piezoelectric element member 1031 and the lever portion 1702 to deform the piezoelectric element member 1031 is not limited to the aforementioned embodiment.

Although the aforementioned embodiment has shown the case where the cable-like piezoelectric element member 1031 is wound on the outer circumference of the rod-like lever portion 1702, for example, the piezoelectric element member 1031 may be not wound but wired so as to pass over the lever portion 1702 simply.

### (Fourth Embodiment)

A keyless entry device according to a fourth embodiment of the invention will be described below.

In this embodiment 4, parts the same as those in Embodiment 2 or 3 are referred to by numerals the same as those in Embodiment 2 or 3 for the sake of omission of duplicated description.

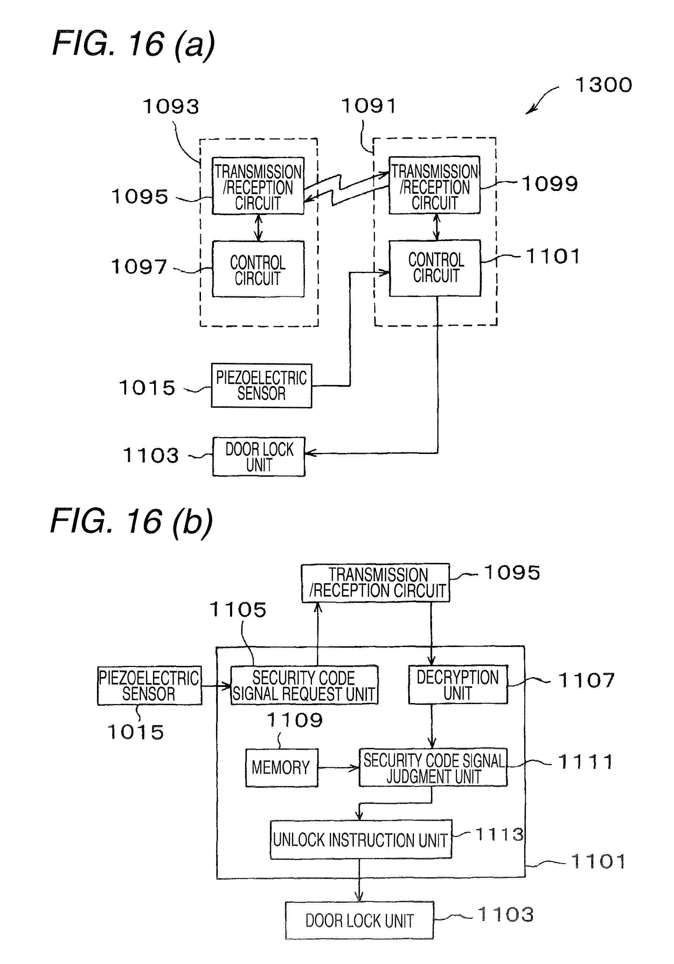

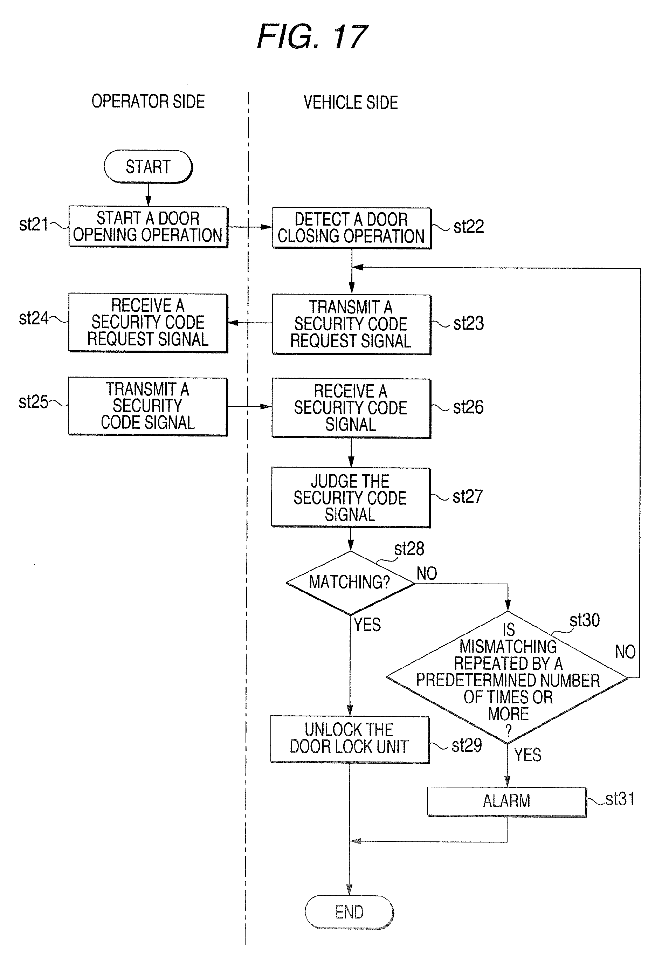

Fig. 16(a) is a block diagram showing the schematic configuration of the keyless entry device according to Embodiment 4 of the invention. Fig. 16(b) is a block diagram showing the detailed configuration of important part of the keyless entry device. Fig. 17 is a flow chart showing an operating procedure of the keyless entry device depicted in Fig. 16.

The keyless entry device 1300 includes a door handle device (e.g. door handle device 1100) which is either of the door handle devices 1100 and 1200 described in the aforementioned second and third embodiments, a transmitter/receiver 1091 mounted on the vehicle side as shown in Fig. 16(a), and a transmitter/receiver 1093 carried with an operator. The keyless entry device 1300 operates basically to unlock a door 1013 in such a manner that a security code signal transmitted by the portable side transmitter/receiver 1093 is received by the vehicle side transmitter/receiver after a security code request signal transmitted by the vehicle side transmitter/receiver 1091 is received by the portable side transmitter/receiver 1093.

The partable side transmitter/receiver 1093 has a transmission/reception circuit 1095 for transmitting/receiving electric wave with the same frequency as that in the vehicle side transmitter/receiver 1091, a control circuit 1097 for controlling the transmission/reception circuit 1095, and an electric source circuit not shown. The control circuit 1097 has a CPU not shown, and a nonvolatile memory in which programs for controlling the CPU and a security code are written. When a security code request code transmitted from the vehicle side transmitter/receiver 1091 which will be described later is received by the transmission/reception circuit 1095, the security code written in the nonvolatile memory is transmitted from the transmission/reception circuit 1095. Incidentally, an antenna coil not shown is provided in the transmission/reception circuit 1095. A primary battery such as a button battery may be used as an electric source for the portable side transmitter/receiver 1093 or configuration may be made so that energy induced in the antenna coil of the portable side transmitter/receiver 1093 by a carrier signal transmitted from the vehicle side transmitter/receiver 1091 is used.

The vehicle side transmitter/receiver 1091 has a transmission/reception circuit 1099 for transmitting/receiving electric wave with the same frequency as that in the portable side transmitter/receiver 1093, and a control circuit 1101 which is a control portion for controlling the transmission/reception circuit 1099. Incidentally, an antenna coil not shown is provided in the transmission/reception circuit 1099. The piezoelectric sensor 1015 and the door lock unit 1103 in the door handle device 1100 are connected to the control circuit 1101. The piezoelectric sensor 1015 monitors vibration caused by the operator's contact with the handle 1011. The control circuit 1101 is turned on when a change value of the vibration is not smaller than a predetermined value. When the control circuit 1101 is turned on, an electric source is supplied from the battery to the vehicle side transmitter/receiver 1091 through a relay box not shown.

The control circuit 1101 of the vehicle side transmitter/receiver 1091 basically has a CPU, and a nonvolatile memory in which programs for controlling the CPU and a security code are written. Specifically, as shown in Fig. 16(b), the control circuit 1101 has a security code signal request unit 1105 for transmitting a security code request signal from the vehicle side transmitter/receiver 1091 in response to a detection signal from the piezoelectric sensor 1015, a decryption unit 1107 for decrypting the security code signal received by the vehicle side transmitter/receiver 1091, a security code signal judgment unit 1111 for judging whether the decrypted security code signal is a legal signal stored in the memory 1109 in advance or not, and an unlock instruction unit 1113 for instructing undoing of the door lock unit 1103 when the security code signal is a legal signal.

In the keyless entry device 1300, as shown in Fig. 17, when the operator inserts the operator's hand in between the door 1013 and the handle body 1023 to open the door (st21), the door opening operation is detected by the control circuit 1101 (st22) and a security code request signal is transmitted from the security code signal request unit 1105 (st23). When the control circuit 1097 of the portable side transmitter/receiver 1093 receives the security code request signal (st24), a security code signal is transmitted from the transmission/reception circuit 1095 (st25). When the control circuit 1101 receives the security code signal (st26), the security code signal is decrypted by the decryption unit 1107 and then judged by the security code signal judgment unit 1111 (st27). When the security code signal is coincident with the security code signal stored in the memory 1109 (st28), the unlock instruction unit 1113 sends an unlock signal to the door lock unit 1103 (st29). On the other hand, when the security code signal is not coincident and the judgment of inconsistency of the security code signal is repeated by a predetermined number of times or more (st30), an alarm is issued (st31).

In the keyless entry device 1300 according to the fourth embodiment, the door handle device 1100 or 1200 which makes high sensitive detection possible, which is hardly affected by disturbance caused by revealed electrodes and which is little in restraints of the installation place, is provided as a main constituent member. Even in the case where hand's or finger's contact with the handle 1011 is relatively weak, the door handle device 1100 can be operated. Moreover, there is no contact joint stroke as in a contact joint switch. Accordingly, no time lag from the moment of starting the door opening/closing operation to the operation of the switch is generated. Accordingly, the time until the unlock instruction unit 1113 of the control circuit 1101 instructs undoing of the door lock unit 1103 after the moment of starting the door opening/closing operation can be shortened greatly. The lock unit 1103 can be undone in accordance with sudden door opening.

Although the present invention has been described in detail and with reference to specific embodiments, it is obvious to those skilled in the art that various changes or modifications can be made without departing from the spirit and scope of the invention.
The present application is based on Japanese Patent Application No. 2004-266393 filed on September 14, 2004, the contents of which are incorporated herein by reference.

### Industrial Applicability

As described above, the door open/close device according to the invention can unlock or unlock/lock a door simultaneously with an external or internal door opening operation or an external or internal door opening/closing operation. The door opening/closing operation can be made by a user easily. The door open/close device can be applied to a door in a car, a house, a warehouse, a business refrigerator, a ship, an airplane, a safe, etc.

## Claims

1. A door open/close device, comprising:
an outer door handle and an inner door handle which are gripped at the time of opening/closing a door;
a door lock unit which locks the door to prevent the door from being opened out of a body in which the door is closed;
a door engagement unit which engages the door with the body so that the door can be opened/closed;
a door disengagement operation unit which disengages the engagement performed by the door engagement unit while being interlocked with an external or internal door opening operation;
a door disengagement signal detection unit which generates a signal based on the operation of the door disengagement operation unit; and
a body side control unit which controls the disengagement operation of the door lock unit based on a detection signal of the door disengagement signal detection unit.

2. A door open/close device, comprising:
an outer door handle and an inner door handle which are gripped at the time of opening/closing a door;
a door lock unit which locks the door to prevent the door from being opened;
a door engagement unit which engages the door with a body so that the door can be opened/closed;
a door disengagement/engagement operation unit which engages and disengages the door engagement unit while being interlocked with an external or internal door opening/closing operation;
a door disengagement/engagement signal detection unit which generates a signal based on the operation of the door disengagement/engagement operation unit; and
a body side control unit which controls the disengagement operation/the engagement operation of the door lock unit based on a detection signal of the door disengagement/engagement signal detection unit.

3. The door open/close device according to claim 1 or 2, wherein the door disengagement signal detection unit or the door disengagement/engagement signal detection unit is provided singly for detecting an external or internal door opening operation or an external or internal door opening/closing operation.

4. The door open/close device according to any one of claims 1 through 3, wherein the door disengagement signal detection unit or the door disengagement/engagement signal detection unit is provided in a position where a signal is generated by the operation of a common portion interlocked with an external or internal door opening operation of the door disengagement operation unit or an external or internal door opening/closing operation of the door disengagement/engagement operation unit.

5. The door open/close device according to any one of claims 1 through 4, wherein the door disengagement signal detection unit or the door disengagement/engagement signal detection unit is provided in the inside of the door.

6. The door open/close device according to any one of claims 1 through 5, wherein the door disengagement signal detection unit or the door disengagement/engagement signal detection unit is made of a piezoelectric element member which is arranged so that the piezoelectric element member is deformed by the operation of the door disengagement operation unit or the door disengagement/engagement operation unit to thereby output an electric signal from the piezoelectric element member.

7. The door open/close device according to claim 6, wherein the piezoelectric element member has a bent portion on which tension is applied; and
wherein the piezoelectric element member is arranged so that the bent portion is deformed by the operation of the door disengagement operation unit or the door disengagement/engagement operation unit.

8. The keyless entry device according to any one of claims 1 through 7, wherein the body side control unit includes:
a body transmission/reception unit;
a security code signal request unit which requests a security code request signal from a door opening/closing operator portable control unit through the body transmission/reception unit in response to a detection signal from the door disengagement signal detection unit or the door disengagement/engagement signal detection unit;
a door opening/closing operator judgment unit which decrypts a security code signal transmitted from the door opening/closing operator portable control unit and judges whether the decrypted security code signal is a predetermined legal signal or not; and
an unlock control unit or a unlock/lock control unit which controls unlocking or unlocking/locking of the door lock unit when the security code signal is a legal signal.

9. A vehicle door equipped with the keyless entry device according to claim 8.

10. A building door equipped with the keyless entry device according to claim 8.

11. A door handle device, comprising:
a handle body which is incorporated in a door so as to serve as a grip portion at the time of opening/closing the door; and
a piezoelectric sensor which is attached to a door side of the handle body,
wherein the piezoelectric sensor is attached to a surface of the handle body facing the door through a cushioning material having a plurality of independently displaceable portions.

12. A door handle device, wherein the independently displaceable portions are formed so that the cushioning material is notched at a plurality of portions.

13. A door handle device, comprising:
a handle which is rotatably supported at one end side thereof to a door through a support shaft, and the other end side thereof being moved in a door drawing direction by the rotation; and
a piezoelectric sensor which is attached to a lever portion attached to a support portion which supports the handle so as to be inclined at a predetermined angle with respect to the support shaft.

14. A keyless entry device, comprising:
a door handle device according to any one of claims 11 through 13;
a vehicle side transmitter/receiver which is mounted on a vehicle side;
a portable side transmitter/receiver which is carried with an operator; and
a control portion which unlocks a door when a security code signal transmitted from the portable side transmitter/receiver is received by the vehicle side transmitter/receiver after a security code request signal transmitted from the vehicle side transmitter/receiver is received by the portable side transmitter/receiver,
wherein the control portion includes:
a security code signal request unit which makes the vehicle side transmitter/receiver to transmit the security code request signal in response to a detection signal from the piezoelectric sensor;
a security code signal judgment unit which judges whether the security code signal received by the vehicle side transmitter/receiver and decrypted is a predetermined legal signal or not; and
an unlock instruction unit which instructs unlocking of the door lock unit when the security code signal is a legal signal.
